(19) Europäisches Patentamt

European Patent Office

Office européen des brevets

(11) **EP 1 024 476 A1**

(12) **EUROPEAN PATENT APPLICATION**
published in accordance with Art. 158(3) EPC

(43) Date of publication:
02.08.2000 Bulletin 2000/31

(51) Int. Cl.⁷: **G10L 11/00**

(21) Application number: **99937091.9**

(86) International application number:
**PCT/JP99/04424**

(22) Date of filing: **17.08.1999**

(87) International publication number:
**WO 00/10160 (24.02.2000 Gazette 2000/08)**

(84) Designated Contracting States:
**AT BE CH CY DE DK ES FI FR GB GR IE IT LI LU MC NL PT SE**

(30) Priority: **17.08.1998 JP 23098298**

(71) Applicant: **Sony Corporation Tokyo 141-0001 (JP)**

(72) Inventor:
**MINAMINO, Katsuki,
Sony Corporation
Tokyo 141-0001 (JP)**

(74) Representative:
**Körber, Martin, Dipl.-Phys.
Mitscherlich & Partner
Patentanwälte
Sonnenstrasse 33
80331 München (DE)**

(54) **SPEECH RECOGNIZING DEVICE AND METHOD, NAVIGATION DEVICE, PORTABLE TELEPHONE, AND INFORMATION PROCESSOR**

(57)    A speech recognition unit has an acoustic analysis section for analyzing an audio signal, and a recognition process section for carrying out recognition process using acoustic models and a language model. The recognition process section has a first scoring section for evaluating evaluation models in the forward order while restricting target evaluation models, a second scoring section for evaluating the evaluation models similarly but in the backward order, and a selection section for selecting a candidate word on the basis of the evaluation by the first and second scoring sections. The speech recognition unit of such structure enables finding of a candidate word of a recognized audio signal at a high speed.

FIG.10

EP 1 024 476 A1

## Description

Technical Field

This invention relates to a speech recognition unit and method, for automatically determining the sequence or series of a word corresponding to an input audio signal, particularly, a speech recognition unit and method for finding the sequence of a word to be a recognition result at a high speed, and a navigation unit, a portable telephone unit and an information processing device which use the speech recognition.

Background Art

Conventionally, a speech recognition technique for automatically determining the sequence of a word corresponding to an input audio signal has been provided.

Such speech recognition technique is used for enabling search through a database or operation of an equipment by speech or voice, or for enabling entry of data to various information equipments by speech.

For example, a database search unit can be considered which recognizes an inquiry about a place name in the case where it is inputted by speech, then selects the corresponding place name from the recognition result, and outputs information such as a map related to that place name.

Alternatively, a device for recognizing a command in the case where it is inputted by speech and for carrying out the corresponding operation, or a system which enables entry of data by speech instead of entering data with a keyboard, can be considered.

The conventional technique relating to such speech recognition will now be described in detail.

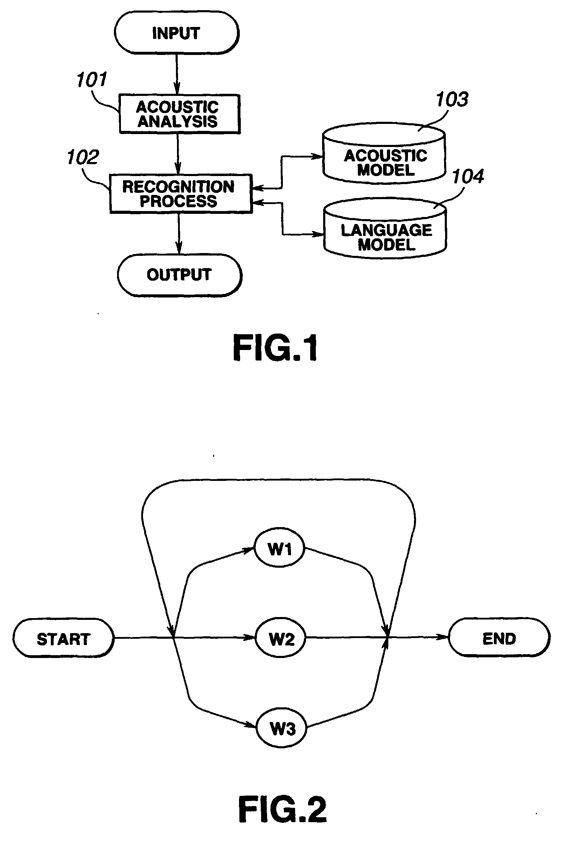

The structure of a speech recognition unit is shown in Fig. 1. The speech recognition unit normally includes an acoustic analysis section 101 for extracting a feature parameter, in other words, a characteristic quantity from an audio signal, a recognition process section 102 for determining a word sequence from a feature sequence, an acoustic model 103 formed by modelling the phoneme or the like, and a language model 104 formed by modelling the connection of the acoustic models 103.

First, an input audio signal is sent to the acoustic analysis section 101, where the feature parameter necessary for recognition is extracted at a minute time interval. For example, the energy, number of zero crossings, pitch and frequency feature of the signal, and the parameter of change thereof are extracted. For frequency analysis, linear prediction coding analysis (LPC), fast Fourier transform (FFT), or band pass filter (BPF) is used. The feature parameter thereof is extracted as a vector or extracted as scalar in quantization. The feature parameter sequence is sent to the recognition process section 102.

The recognition process section 102 determines the word sequence corresponding to the feature parameter sequence sent from the acoustic analysis section 101, using the acoustic model 103 and the language model 104, and outputs the word sequence. As the recognition technique, DP matching, the neural network, or the bidden Markov model (HMM) is broadly employed.

The DP matching is adapted for carrying out recognition by comparison with a standard pattern called template. The neural network is adapted for carrying out recognition by means of a network model simulating the structure of human brain. The HMM is a state transition model having the state transition probability and the symbol output probability and adapted for carrying out recognition by means of this probability model.

In any of these techniques, it is necessary to predetermine the template, the weighting factor of the network model, and the probability and statistical value of the HMM, corresponding to the acoustic model 103 and the language model 104. In this case, modelling as the acoustic model 103 is possible at various levels such as phoneme, syllable, word, phrase, and sentence.

On the other hand, the language model 104 is formed by modelling the connection of the acoustic models 103 and is used for recognizing a word, phrase or sentence obtained by connecting several acoustic models 103.

The recognition process section 102 scores various word sequence by using these acoustic model 103 and language model 104, and selects the word sequence of the highest score or a plurality of upper word sequence as a hypothesis of the recognition result.

In some cases, selection of one word corresponding to one input speech is referred to as word recognition, and selection of corresponding word sequence is referred to as connected word recognition or connected speech recognition. In this specification, these selections are not discriminated and all the outputs are handled as word sequence.

The speech recognition using the HMM will now be described further in detail.

First, the HMM corresponding to a Japanese assumed name is constituted and it is found in advance as an acoustic model 103. This model is formed by modelling as a state transition model which connects a plurality of states via paths, and probability parameters called state transition probability and symbol output probability are defined as being determined to maximize a certain evaluation value.

Normally, a corresponding audio signal is analyzed and the parameters are determined so that the eventual probability of the resultant feature parameter sequence becomes higher. For example, with respect to the HMM corresponding to "a" (in Japanese), the parameters are determined so that the eventual probability of a feature parameter sequence obtained from an audio signal pronounced as "a" becomes higher. By using such HMM, calculation of the eventual probability with respect to each assumed name is made executable.

In the case where a dictionary including words such as "kyo" (which means today), "asu" (tomorrow), "1 or ichi" (one), "2 or ni" (two) and "3 or san" (three) is provided to the language model 104, each of these words can be constituted with an assumed name connected thereto. Therefore, by coupling the acoustic model (HMM) corresponding to the assumed name, calculation of the eventual probability (score) with respect to each word is made possible.

Similarly, the score calculation with respect to an arbitrary word formed by connecting assumed names is made possible. This enables easy addition of a new word to the language model 104 or replacement by another dictionary. If the same word has a plurality of pronunciations such as "4 or yon" and "4 or shi" (both of which mean four), each of these is included in the language model 104 as an entry of the dictionary, thereby enabling calculation of the score with respect to both pronunciations.

Similarly, a phrase such as "kuji kara juji made" (from nine o'clock to ten o'clock) can be handled as one word and included in the language model as an entry of the dictionary. Generally, however, the processing capability of the recognition process section 102 is limited and the number of words that can be handled is often restricted.

Thus, there is employed a method for storing the connection of words and semantic linkage into the language model 104 in advance and carrying out the score calculation with respect to an array of connected words using the limitation of the language model, thereby handling complicated words at a large scale.

In the above-mentioned example, by providing numerals of "0 or zero" (zero) to "24 or niju-yon" (twenty-four) and words "ji" (o'clock), "kara" (from) and "made" (to) as the dictionary of the language model 104, thus expressing the connection of the acoustic models based on Japanese syllabary kana as a unit, and further providing a rule of "[numeral]" + "ji" + "kara" + "[numeral]" + "ji" + "made" to express the connection of words, all the phrases of "[numeral] ji kara [numeral] ji made" (which means from [] o'clock to [] o'clock) can be handled.

A method for forming a more precise model as the language model 104 by embedding a probability value such as the transition probability to the connection is also broadly employed.

As described above, in the speech recognition using the HMM, the acoustic models 103 are connected in accordance with the language model 104, and the word sequence of the highest score or a plurality of upper candidates of all the word sequence that can be handled are selected, thus determining the word sequence corresponding to the input audio signal.

In the above-described example, the HMM corresponding to the assumed name is used. However, it is also possible to connect the HMM of the other recognition units such as phoneme and syllable, or to utilize the HMM based on each word as a unit. As the acoustic model 103, a template used in the DP matching or a neural network can be used in place of the HMM.

The problem of the speech recognition will now be generalized. It is assumed that the feature parameter sequence sent from the acoustic analysis section 101 is expressed as follows.

$$X = \{x_1, x_2, ..., x_T\}$$

In this case, if scoring is carried out with respect to all the word sequence that can be handled in accordance with the acoustic model 103 and the language model 104, the score

$$S(w_1, w_2, ..., w_N \mid x_1, x_2, ..., x_T)$$

is found with respect to each word sequence

$$w_1, w_2, ..., w_T.$$

Thus, formalization can be carried out as a problem for finding the word sequence of the maximum score or a plurality of upper candidates.

The calculation method and the value of score vary depending on the difference of the acoustic model 103 or the language model 104. In this case, a score calculation method using the state transition model will be briefly described.

In the case where the acoustic model 103 is expressed by a certain state transition model, a large-scale state transition network for expressing all the word sequence that can be handled can be constituted by connecting the acoustic models 103 in accordance with the language model 104.

For example, it is assumed that thee words $w_1$, $w_2$ and $w_3$ are provided and that restraints relating to the transition between words as shown in Fig.2 are provided with respect to the connection of respective words. Specifically, transition from the start to $w_1$, $w_2$ and $w_3$, and transition from $w_1$, $w_2$ and $w_3$ to the end take place. In this case, all the word sequence formed by combining the words $w_1$, $w_2$ and $w_3$ can be handled. Such network is herein referred to as a word network.

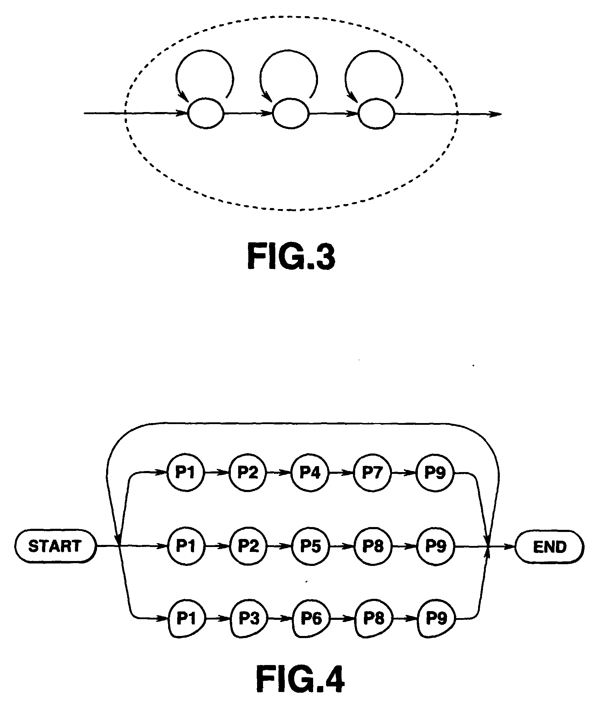

Meanwhile, it is assumed that $p_1$, $p_2$, $p_3$, ..., $p_9$ are provided as the acoustic models 103 and that each acoustic model $p_i$ is a state transition model having n states. For example, as the acoustic model $p_i$, a model formed by modelling a phoneme, syllable or assumed name may be considered. Fig.3 shows an example of the acoustic model 103 modelled with three states.

It is now assumed that the following restraints relating to the connection of the acoustic models 103 are provided with respect to the respective words $w_1$, $w_2$ and $w_3$. For example, it is assumed that a phonemic expression, a syllabic expression, or a kana expression is provided for each word.

$$w_1: p_1\ p_2\ p_4\ p_7\ p_9$$
$$w_2: p_1\ p_2\ p_5\ p_8\ p_9$$
$$w_3: p_1\ p_3\ p_6\ p_8\ p_9$$

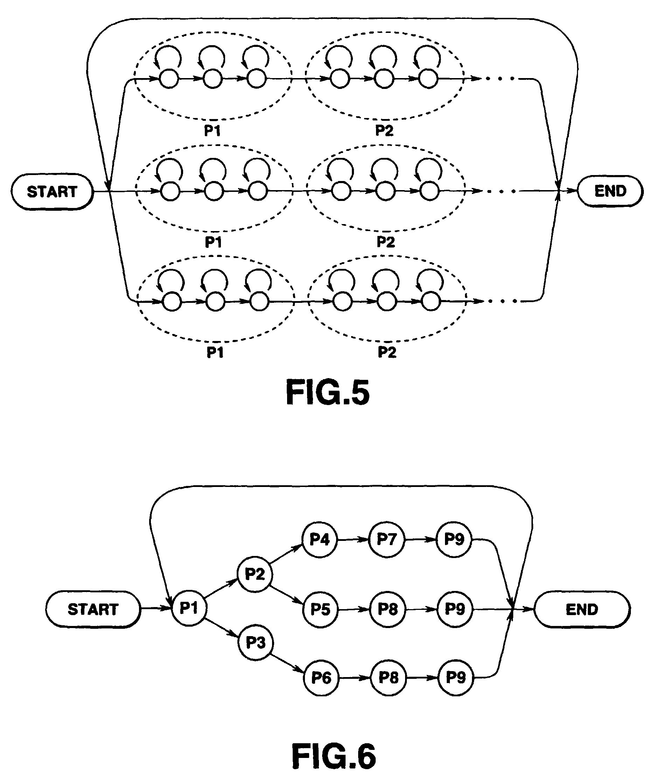

In this case, a network having $p_i$ as a node as shown in Fig.4 can be constituted. Moreover, by replacing each $p_i$ with the state transition model of the corresponding acoustic model 103, a state transition network as shown in Fig.5 can be obtained.

Normally, an initial node and a last node are set in such state transition network. Then, a certain word sequence can be caused to correspond to all the routes that connect the initial node and the last node so that the network preparation method can be known.

At each node on this state transition network, an evaluation scale for evaluating the similarity to the feature parameter $x_i$ sent from the acoustic analysis section 101 is obtained. For example, a distance from a standard pattern called template is provided, or an evaluation scale is provided by a method of digitizing the similarity using a neural network or a probability density function obtained by learning in advance.

The respective states on the network are now expressed as $s_1$, $s_2$, ..., $s_n$. In this case, the cumulative score $\alpha_1(t)$ of a state $s_i$ at a time t can be calculated, for example, using the following recursion formula.

$$\text{1. where } t = 0 \text{ holds, } \alpha_i(0) \ (i = 1, 2, ..., N) \text{ is initialized.} \tag{1}$$

$$\text{2. where } t = 1, 2, ..., N \text{ holds, } \alpha_i(t) = \Sigma_j \{\alpha_j(t-1) + \alpha_{ji} + d_i(xt)\}$$

In this case, $\alpha_{ji}$ is the score provided in transition from a state $s_j$ to a state $s_i$, and $d_i(xt)$ is the score indicating the similarity to the feature parameter $x_t$ provided in the state $s_i$ as described above.

In short, by accumulating the local similarity $d_i(xt)$ calculated in each state $s_i$ with the lapse of time in consideration of the score $\alpha_{ji}$ at the time of state transition, the cumulative score $\alpha_i(t)$ is calculated.

For the calculation of $\alpha_i(t)$, the following equation may be used instead of the equation (1).

$$\alpha_i(t) = \max_j \{\alpha_j(t-1) + \alpha_{ji} + d_i(x_t)\} \tag{2}$$

This is a calculation method called Viterbi algorithm, which is often used for reducing the parameter of arithmetic operation.

At the last time $t = T$, the cumulative score at the last node on the state transition network is found. After that, the route from the initial node to the last node which provides that score is found and the obtained score is provided as

$$S(w_1, w_2, ..., w_N \mid x_1, x_2, ..., x_T)$$

with respect to the word sequence $w_1$, $w_2$, ..., $w_N$ corresponding to the route.

Although the value of $\alpha_{ji}$, the method for calculating $d_i(x_t)$ and the score accumulation method for $\alpha_i(t)$ vary depending on the provided acoustic models 103 and language model 104, the above-described score calculation method on the state transition network and the technique for finding the corresponding word sequence from the route of the highest score or from a plurality of upper routes are broadly employed in the speech recognition.

Depending on the method for constituting the state transition network, particularly, on the method of setting the initial node and the last node, the score can be provided for only one word sequence or for a plurality of word sequence.

Instead of completely preparing the state transition network in advance, a method of calculating the score while sequentially preparing the state transition network with the lapse of time may be considered.

Meanwhile, when the score calculation on such state transition network is considered, calculating the cumulative score $\alpha_i(t)$ in all the states $s_i$ with respect to the feature parameter $x_t$ sent from the acoustic analysis section 101 is possible in principle. However, the vocabulary is increased and the number of nodes in the state transition network is significantly increased by the increase in the number of types of word sequence to be handled, thus resulting in a problem of an extremely large parameter of calculation.

As the method for solving this problem, various methods have been conventionally proposed. One of these proposed methods is to make the state transition network itself smaller. In this method, redundant parts on the state transition network are bundled to be common.

For example, if words "kyouto" (Kyoto) and "kyousou" (competition) are given, the part of "kyou" at the beginning of the word is common to these words. Thus, by bundling such common part at the beginning of the word on the network, the number of nodes in the state transition network can be reduced.

In the example of the network constituted by three words $w_1$, $w_2$ and $w_3$ shown in Fig.2, since $p_1$ and $p_2$ at the beginning of the word are common, the network shown in Fig.4 can be compressed as shown in Fig.6. That is, the network can be compressed by bundling the $p_1$ and $p_2$ at the beginning of the word shown in Fig.4 and thus making them common as shown in Fig.6.

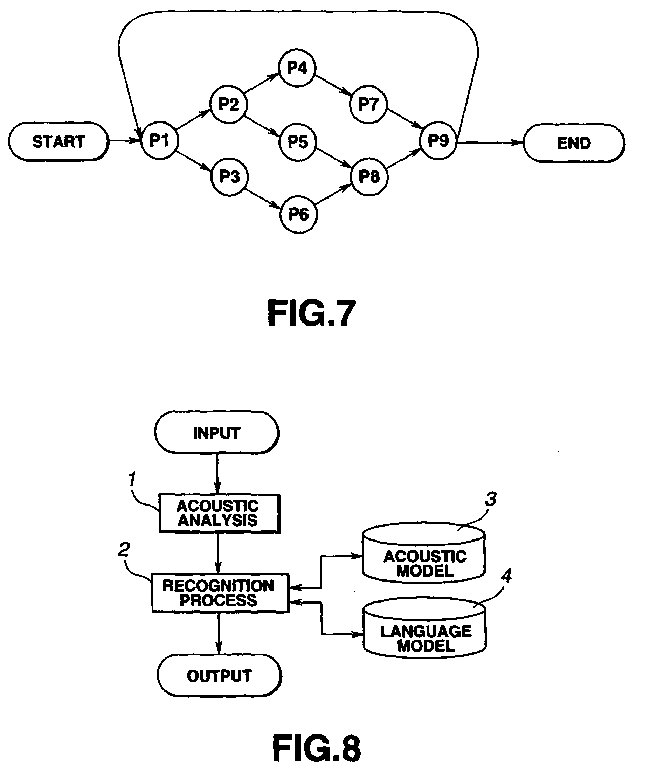

Similarly, there are a number of words having common parts at the ending of the word. By bundling the common parts, the number of nodes in the state transition network can be further reduced. In the above example, $p_8$ and $p_9$ at the ending of the word are common and can be bundled, thus enabling compression of the network shown in Fig.6 to a network shown in Fig.7. That is, the network can be compressed by bundling $p_8$ and $p_9$ at the ending of the word shown in Fig.6 and thus making them common as shown in Fig.7.

By replacing each node $p_i$ with the state transition model of the acoustic models in the compressed network, a much smaller state transition network can be provided. Thus, the above-mentioned problem about the parameter of calculation can be somewhat attenuated.

However, even in the case where the state transition network is compressed, if a large number of states are included therein, the parameter of calculation required for calculating the cumulative score remains large and therefore a demand for reducing the parameter of calculation is often generated.

Thus, as a method for solving this, a pruning technique called beam search is broadly employed. In this technique, the state for which the score calculation should be carried out is selected on the basis of a certain standard and the score of the selected state alone is calculated, instead of calculating the score $\alpha_i(t)$ with respect to all the states $s_i$ included in the state transition network.

As the standard for selecting the state $s_i$ for which the score calculation should be carried out, a method of leaving only upper k states from the state of the best score on the basis of the cumulative score at a certain time t, or a method of leaving the states of a better score than a certain threshold value may be employed.

It should be noted that while the calculation of the cumulative score with respect to all the states always enables determination of the route which provides the best score on the state transition network, the limited number of states $s_i$ for which the score calculation should be carried out causes generation of a new problem such that obtaining the route for providing the best score cannot be guaranteed.

As the method for solving this problem, increasing the number of states $s_i$ for which the score calculation should be carried out as much as possible is the most simple method. In general, as the number of states $s_i$ for which the score calculation should be carried out is increased, there is a higher possibility that the route for providing the best score can be obtained. Meanwhile, the acoustic model 103 and the language model 104 are designed so that the best score can be found from the route corresponding to the correct word sequence.

Therefore, it can be expected that as the number of states $s_i$ for which the score calculation should be carried out is increased, there is a higher possibility that the correct word sequence can be obtained. Thus, there has been conventionally employed a method of adjusting the threshold value or the like in beam search so that the rate of obtaining the correct word sequence, that is, the correct recognition rate becomes as high as possible and so that the number of states $s_i$ for which the score calculation should be carried out becomes as small as possible. In some cases, more strict restraints are set so that the number of states for which the score calculation should be carried out becomes smaller than a desired number even at the cost of the correct recognition rate, which might be slightly lowered because of the restraint on the computing power of the system.

Basically, however, since the trade-off between the parameter of calculation and the correct recognition rate is considered, too strict a limitation is undesirable because it causes significant reduction in the correct recognition rate. Thus, as a method for reducing the parameter of calculation with the least possible reduction in the correct recognition rate, there are proposed a method of dynamically varying the threshold value for limiting the number of states for which the score calculation should be carried out instead of keeping the threshold at a constant value, and a method of carrying out simple evaluation using a feature parameter sequence of up to a slightly advanced time and then saving the state for which the score calculation should be carried out at the present time on the basis of the result of evaluation.

Also, there is proposed a method for carrying out limitation using the entire feature parameter sequence, that is, a method of estimating the score accumulated by the feature parameter sequence from the current time to the final time, then finding a value which is obtained by adding the estimate value to the cumulative score already calculated by the present time, and limiting the number of states for which the score calculation should be carried out on the basis of the resultant value.

For example, a technique (A* search) of calculating the cumulative score on the best-first basis, or a technique (A* beam search) of calculating the cumulative score synchronously with the time while limiting the states for which the score calculation should be carried out as in the foregoing beam search may be employed. Particularly in the A* search, if the condition is met tat the estimate value is not so strict as the actually found value, it is guaranteed that the same result as when the cumulative score is calculated with respect to all the states, that is, the route for providing the best score on the state transition network, is found.

In addition, in these techniques, as the estimate value is closer to the value of actual calculation, the effect of reducing the parameter of calculation required for calculating the cumulative score is expected to be higher.

However, excessive calculation of the estimate value is generated. It is desired that this parameter of calculation is made as small as possible. In such case, it is very difficult to obtain the estimate value with high precision.

On the contrary, if the estimate value has low precision, the A* search becomes closer to a technique of calculating the cumulative score on the breadth-first basis, and therefore the parameter of calculation required for calculating the cumulative score is significantly increased. Also, since the A* beam search becomes closer to the above-described beam search, the problem of trade-off between the parameter of calculation and the correct recognition rate arises again.

In the A* search and the A* beam search, a method of accumulating the score from the ending point, in other words, the trailing end to the beginning point, in other words, the leading end of the feature parameter sequence is also proposed.

In this case, the score accumulated by the feature parameter sequence from the current time to the initial time is estimated, and a value is found by adding the estimate value to the cumulative score from the final time which is already calculated by the present time. On the basis of the resultant value, the states for which the score calculation should be carried out are limited.

However, it is only the difference in the direction of processing, and the problem in the A* search and the A* beam search is not solved.

Disclosure of the Invention

In view of the foregoing status of the art, it is an object of the present invention to provide a speech recognition unit and method which enables finding of a word sequence of the best score at a higher speed than in the conventional technique without lowering the recognition precision, and a navigation unit, a portable telephone unit and an information processing device using the speech recognition.

A speech recognition unit according to the present invention, having an acoustic analysis section for extracting an acoustic feature parameter sequence from an audio signal and a recognition process section for providing a word candidate corresponding to the audio signal using acoustic models of the acoustic feature sequence and a language model prescribing the connection of the acoustic models on the basis of the feature parameter sequence supplied from the acoustic analysis section, includes: first evaluation means for restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence; second evaluation means for restricting target evaluation models for carrying out evaluation from the plurality of evaluation models while storing evaluation values with respect to the similarity to the feature sequence in a backward order from the ending point toward the beginning point of the feature parameter sequence; and selection means for selecting an evaluation model that gives the maximum evaluation value of the evaluation values obtained by the first evaluation means and the second evaluation means.

A speech recognition method according to the present invention, having an acoustic analysis step of extracting an acoustic feature parameter sequence from an audio signal and a recognition process step of providing a word candidate corresponding to the audio signal using acoustic models of the acoustic feature sequence and a language model prescribing the connection of the acoustic models on the basis of the feature parameter sequence supplied from the acoustic analysis step, includes: a first evaluation step of restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence; a second evaluation step of restricting target evaluation models for carrying out evaluation from the plurality of evaluation models while storing evaluation values with respect to the similarity to the feature sequence in a backward order from the ending point toward the beginning point of the feature parameter sequence; and a selection step of selecting an evaluation model that gives the maximum evaluation value of the evaluation values obtained ate the first evaluation step and the second evaluation step.

A navigation unit according to the present invention includes: a current position detection unit for detecting the current position of a vehicle; a direction detection unit for detecting the travelling direction of the vehicle; storage means in which road map information is stored; arithmetic processing means for calculating current position information corrected to locate the current position of the vehicle on a road on the basis of the current position of the vehicle detected by the current position detection means and the road map information read out from the storage means; audio input means for inputting an audio signal; speech recognition means, having an acoustic analysis section for extracting an acoustic feature parameter sequence from an audio signal inputted to the audio input means and a recognition process section for providing a word candidate corresponding to the audio signal using acoustic models of the acoustic feature sequence and a language model prescribing the connection of the acoustic models on the basis of the feature parameter sequence supplied from the acoustic analysis section, the speech recognition means including first evaluation means for restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence, second evaluation means for restricting target evaluation models for carrying out evaluation from the plurality of evaluation models while storing evaluation values with respect to the similarity to the feature sequence m a backward order from the ending point toward the beginning point of the feature parameter sequence, and selection means for selecting an evaluation model that gives the maximum evaluation value of the evaluation values obtained by the first evaluation means and the second evaluation means, the speech recognition means being adapted for recognizing the audio signal inputted from the audio input means; control means for reading out the road map information from the storage means on the basis of the current position information calculated by the arithmetic processing means and for controlling the operating state on the basis of speech recognition information obtained from the speech recognition means; and display means for displaying the current position by means of the current position information on the road map read out from the storage means.

A portable telephone unit according to the present invention for carrying out communication with a base station using electromagnetic waves of a radio frequency includes: audio input means for inputting an audio signal; key input means for inputting information by key operation; modulation means for modulating the audio signal inputted to the audio input means to a signal of a radio frequency; an antenna for transmitting the signal of the radio frequency sent from the modulation means and for receiving a signal of a radio frequency; demodulation means for demodulating the signal of the radio frequency received by the antenna to an audio signal; audio output means for outputting the signal of the radio frequency demodulated to the audio signal by the demodulation means and received by the antenna; speech recognition means, having an acoustic analysis section for extracting an acoustic feature parameter sequence from the audio signal and a recognition process section for providing a word candidate corresponding to the audio signal using acoustic models of the acoustic feature sequence and a language model prescribing the connection of the acoustic models on the basis of the feature parameter sequence supplied from the acoustic analysis section, the speech recognition means including first evaluation means for restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence, second evaluation means for restricting target evaluation models for carrying out evaluation from the plurality of evaluation models while storing evaluation values with respect to the similarity to the feature sequence in a backward order from the ending point toward the beginning point of the feature parameter sequence, and selection means for selecting an evaluation model that gives the maximum evaluation value of the evaluation values obtained by the first evaluation means and the second evaluation means, the speech recognition means being adapted for recognizing the audio signal inputted from the audio input means; and control means for controlling the communication operation on the basis of the information inputted to the key input means or speech recognition information recognized by the speech recognition means.

An information processing device according to the present invention includes: storage means in which a program is stored; key input means for inputting information in response to key operation; audio input means for inputting an audio signal; speech recognition means, having an acoustic analysis section for extracting an acoustic feature parameter sequence from an audio signal inputted to the audio input means and a recognition process section for providing a word candidate corresponding to the audio signal using acoustic models of the acoustic feature sequence and a language model prescribing the connection of the acoustic models on the basis of the feature parameter sequence supplied from the acoustic analysis section, the speech recognition means including first evaluation means for restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence, second evaluation means for restricting target evaluation models for carrying out evaluation from the plurality of evaluation models while storing evaluation values with respect to the similarity to the feature sequence in a backward order from the ending point toward the beginning point of the feature parameter sequence, and selection means for selecting an evaluation model that gives the maximum evaluation value of the evaluation values obtained by the first evaluation means and the second evaluation means, the speech recognition means being adapted for recognizing the audio signal inputted from the audio input means; and arithmetic means for controlling the processing state of the program on the basis of the information from the key input means or speech recognition means from the speech recognition means.

Brief Description of the Drawings

Fig.1 is a block diagram showing the schematic structure of a speech recognition unit.

Fig.2 shows an example of restriction on the connection of three words $w_1$, $w_2$ and $w_3$.

Fig.3 shows an exemplary acoustic model formed in a state transition model.

Fig.4 shows an exemplary network of acoustic models.

Fig.5 shows an exemplary state transition network.

Fig.6 shows a network in which common parts at the beginning of the word in the network are bundled.

Fig.7 shows a network which is obtained by further bundling common parts at the ending of the word in the network of Fig.6.

Fig.8 is a block diagram showing the schematic structure of a speech recognition unit.

Fig.9 is a block diagram showing the internal structure of a recognition section of the speech recognition unit.

Fig.10 is a flowchart showing the speech recognition processes.

Fig.11 shows a network used for word speech recognition using words $w_1$, $w_2$ and $w_3$.

Fig.12 shows a network used for word speech recognition using words $w_1$, $w_2$ and $w_3$.

Fig.13 shows the result of a word recognition experiment.

Fig.14 shows an exemplary state transition network.

Fig.15 is a flowchart of improved processes.

Fig.16A shows the case where score calculation is carried out in all the states on the state transition network.

Fig.16B shows the case where score calculation is carried out using forward score calculation and backward score calculation.

Fig.16C shows the case where score calculation is carried out while limiting the number of states for which cumulative score calculation is simply carried out.

Fig.17 is a block diagram showing the schematic structure of a navigation unit.

Fig.18 is a perspective view showing the state in which a navigation unit is incorporated in an automobile.

Fig.19 is a perspective view showing the vicinity of the driver's seat in the case where the navigation unit is incorporated in the automobile.

Fig.20 is a block diagram showing the schematic structure of a portable telephone unit.

Fig.21 is a perspective view showing the appearance of the portable telephone unit.

Fig.22 is a block diagram showing the schematic structure of an information processing device.

Best Mode for Carrying Out the Invention

Preferred embodiments of the present invention will now be described with reference to the drawings.

A speech recognition unit in an embodiment of the present invention includes an acoustic analysis section 1 for extracting a feature parameter from an audio signal, a recognition process section 2 for determining a word sequence from a feature parameter sequence sent from the acoustic analysis section 1, acoustic models 3 formed by modelling phoneme or the like, and a language model 4 formed by modelling the connection of the acoustic models 3, as shown in Fig.8.

In the embodiment of the present invention, a hidden Markov model (HMM) is employed as a speech recognition technique. The HMM is a state transition model having a state transition probability and a symbol output probability and is adapted for carrying out recognition using the probability model.

An audio signal inputted to the speech recognition unit is sent to the acoustic analysis section 1, where extraction of feature parameters necessary for recognition is carried out at a very short time interval. These feature parameters are extracted as vectors, or extracted as scalar in quantization. A feature parameter sequence extracted by the acoustic analysis section 1 is sent to the recognition process section 2.

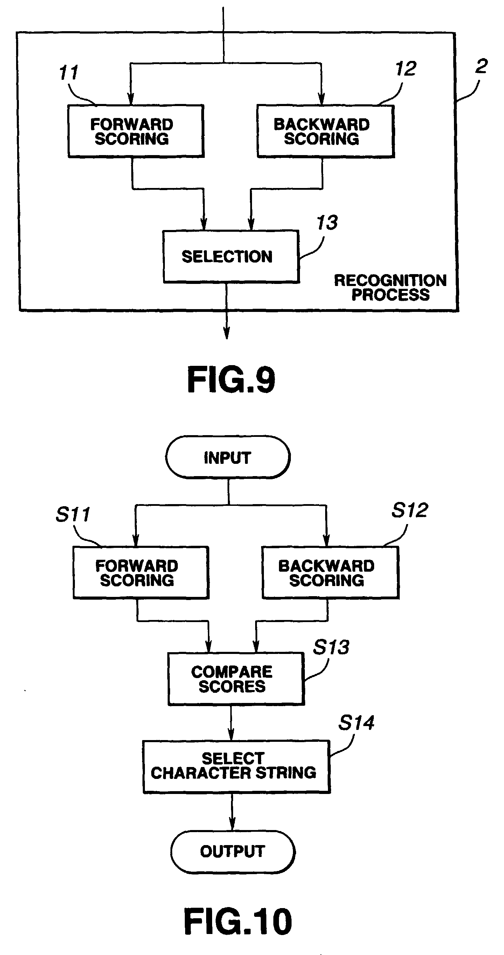

The recognition process section 2 determines a word sequence corresponding to the feature parameter sequence sent from the acoustic analysis section 1 by using the acoustic models 3 and the language model 4, and outputs the determined word sequence. The recognition process section 2 has a forward scoring section 11 as first evaluation means for carrying out forward scoring, a backward scoring section 12 as second evaluation means for carrying out backward scoring, and a selection section 13 for selecting a word sequence on the basis of the evaluation values from the forward scoring section 11 and the backward scoring section 12, as functional blocks for evaluation of a word sequence, as shown in Fig.9.

The forward scoring section 11 and the backward scoring section 12 carry out scoring with respect to various word sequence by using the acoustic models 3 and the language model 4, and select the word sequence of the highest score or a plurality of upper word sequence as hypotheses of the recognition results.

In this processing, it is possible to constitute the acoustic models 3 at various levels such as phoneme, syllable, word, phrase, or sentence. On the other hand, the language model 4 is formed by modelling the connection of the acoustic models 3 and is used for enabling recognition of a word, phase or sentence obtained by connecting several acoustic models 3.

In some cases, selection of one word corresponding to one input speech is referred to as word recognition, and selection of a corresponding word sequence is referred to as connected word recognition or connected speech recognition. In this description, however, these types of recognition are not discriminated and all outputs are handled as word sequence.

The problem of the speech recognition can be formalized as a problem for finding the word sequence

$$w_1, w_2, ..., w_T.$$

having its score maximized

$$S (w_1, w_2, ..., w_N \mid x_1, x_2, ..., x_T)$$

or a plurality of upper candidates, of all the word sequence that can be handled in accordance with the acoustic models 3 and the language model 4 with respect to the feature parameter sequence

$$X = \{x_1, x_2, ..., x_T\}$$

sent from the acoustic analysis section 1. In the score calculation method therefor, a state transition network can be used.

First, a first embodiment of the present invention will be described.

A simple problem of word speech recognition for determining a word corresponding to an input speech from

words $w_1$, $w_2$ and $w_3$ is considered.

In this case, it is assumed that the respective words are provided as follows by connecting acoustic models $p_1$, $p_2$, $p_3$, ..., $p_9$.

$w_1$: $p_1$ $p_2$ $p_4$ $p_7$ $p_9$
$w_2$: $p_1$ $p_2$ $p_5$ $p_8$ $p_9$
$w_3$: $p_1$ $p_3$ $p_6$ $p_8$ $p_9$

In addition, it is assumed that each acoustic model $p_i$ is formed as a state transition model as shown in Fig.3. That is, it is assumed that each acoustic model $p_i$ is formed as a state transition model consisting of three states.

The flow of the word recognition of the first embodiment will be described with reference to the flowchart of Fig.10.

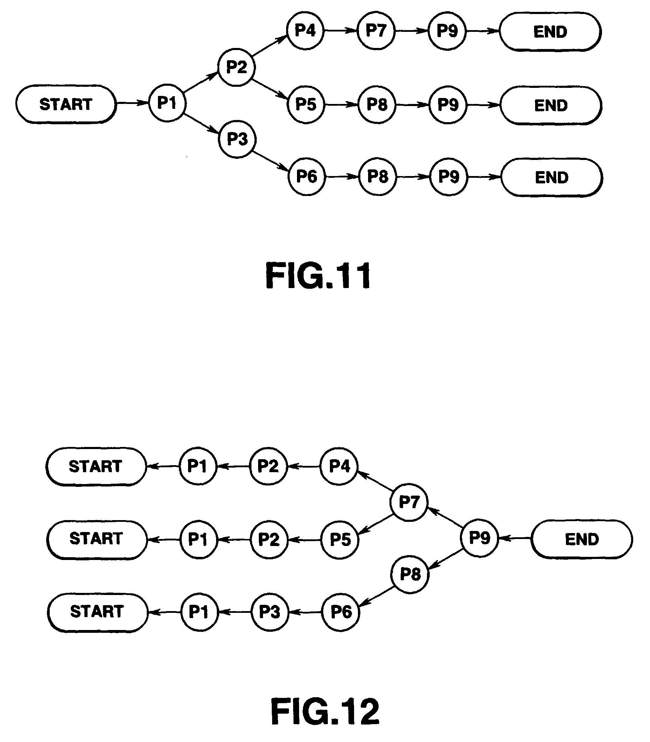

With respect to such state transition models, a network in which the beginning of the word is made common as shown in Fig.11 and a network in which the ending of the word is made common as shown in Fig.12 can be separately constituted.

Then, the nodes on the respective networks are replaced by the state transition models of the acoustic models, thereby enabling preparation of the two state transition networks.

In the case where a feature parameter sequence

$$X = \{x_1, x_2, ..., x_T\}$$

is sent from the acoustic analysis section 1, the recognition process section 2 first canies out cumulative score calculation in the temporally forward direction from a time $t = 1$, using the state transition network constituted from Fig.11.

It is to be noted that the calculation is carried out while limiting the states for which the score calculation should be carried out, similarly to the above-described beam search.

Specifically, at the first step S11 of Fig.10 as a first evaluation step, on completion of the score calculation up to the final time $t = T$, the cumulative score from an initial node to a final node, found as a result of the scare calculation, is set as a forward score for each word. Such forward score calculation is carried out by the forward scoring section 11 of the recognition process section.

In this case, a word for which the cumulative score was not found because of pruning of the route is handled as having no score.

At step S12 as a second evaluation step, the score calculation in the temporally backward direction from the time $t = T$, using the state transition network constituted from Fig.12. In this case, too, the calculation is carried out while limiting the states for which the score calculation should be carried out.

Consequently, at step S12, the cumulative score from the final node to the initial node is found. This cumulative score is newly set as the backward score for each word. Such backward score calculation is carried out by the backward scoring section 12 of the recognition process section 2.

In this case, too, a word for which the cumulative score was not found because of pruning of the route is handled as having no score.

With respect to the forward scoring at step S11 and the backward scoring at step S12, the backward scoring at step S12 may be carried out before the forward scoring at step S11.

Next, at step S13, the forward score and the backward score for each word are compared, and the better score is newly set as the final score of the word.

Finally, at step S14, the word of the best final score of all the words, or a plurality of upper candidates are selected. Such backward selection is carried out by the selection section 13 of the recognition process section 2.

It should be noted that the forward score and the backward score differ only in that the cumulative score calculation is carried out in the temporally forward direction from $t = 1$ or in the temporally backward direction from $t = T$, and therefore become the same score if the number of states for which the score calculation should be carried out is not limited.

The above-described flow largely differs from the conventional technique in that the processing of step S12 for carrying out backward score calculation and the processing of step S13 for comparing the forward score and the backward score so as to provide the better score as the final score of the word are added.

As such processing is added, even if the route for best score is pruned from the state transition network in carrying out the forward score calculation, it can be expected that the route can be found in carrying out the backward score calculation.

Similarly, even if the route for the best score is pruned in carrying out the backward score calculation, it can also be expected that the score calculation on that route has already been completed in carrying out the forward score calculation.

In short, by independently carrying out the forward score calculation and the backward score calculation, it can be expected that both score calculations improve the rate at which the route for the best score is found with respect to each other.

By utilizing this property, the necessity of finding the route for the best score in the forward score calculation process is eliminated, thus enabling significant limitation of the number of states for which the score calculation should be carried out.

Particularly, even in the case where a feature parameter sequence X is inputted such that the cumulative score is low at the initial time, if the highest score is ultimately reached, it is expected that the cumulative score in the latter half of the feature parameter sequence is high. Since it means there is less possibility that the route is pruned in the backward score calculation process, it is possible to drastically restrict the number of states for which the score calculation should be carried out, in the forward score calculation process.

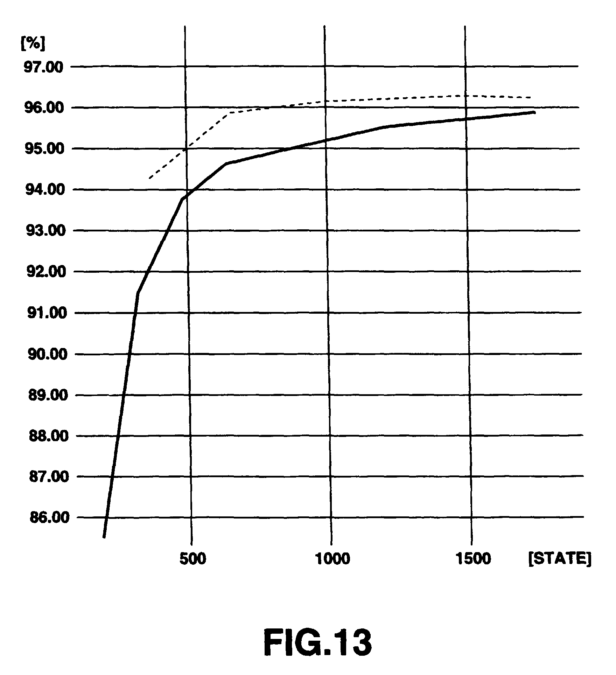

Actually, when an experiment of the word recognition was conducted using this method, the result as shown in Fig.13 was obtained. The experiment is of the word recognition using a dictionary containing 5075 words and was conducted to find the rate at which 303 words contained in the dictionary and pronounced by 20 male and female people in total were correctly recognized.

The ordinate represents the rate [%] at which the words were correctly recognized, and the abscissa represents the total number of states for which the score calculation was actually carried out, divided by the length T of the input feature parameter sequence,

$$X = \{x_1, x_2, ..., x_T\}$$

that is, the average number of states for which the score calculation was carried out at a given time.

The solid line shows the result in the case where the score calculation was carried out only in the forward direction using the state transition network constituted from Fig.11, as in the conventional technique. The dotted line shows the result in the case where the score calculation of the first embodiment was carried out. In this technique, however, the total number of states in the case where the forward and backward score calculation was carried out, divided by the length T of the input feature parameter sequence, is employed as the value of the abscissa.

The total number of states on the state transition network constituted from Fig.11 was 73873, and the rate of correct answer was 96.39% in the case where no restriction was put on the states for which the score calculation should be carried out.

From the results of the experiment, it can be understood that the rate of correct answer is increased by increasing the number of states for which the score calculation should be carried out, using either the conventional technique or the technique of the first embodiment, and that the rate of correct answer approaches to the rate of correct answer 96.39% of the case where the score calculation was carried out for all the states.

However, if the two techniques are compared, it is understood that the rate is converged to 96.39% faster in the technique of the first embodiment. In short, it is shown that the parameter of calculation required for achieving an equivalent rate of correct answer is smaller when this technique is used.

While the word speech recognition is employed in this description, similar score calculation can be carried out even in the case where a word sequence corresponding to an input speech is found under the language restriction as shown in Fig.2.

First, a network in which common parts at the beginning of the word are bundled, that is, made common as shown in Fig.6, is prepared for the forward score calculation. Separately from this, a network in which common parts at the ending of the word are bundled as shown in Fig.6 is prepared for the backward score calculation. Moreover, each node in the respective networks is replaced by an acoustic model, thereby providing two state transition networks.

The foregoing processing is carried out as preprocessing. In the recognition process, the forward score calculation of step S11 and the backward score calculation of step S12 as shown in Fig.10 are carried out using the respective state transition networks.

At this point, the word sequence of the highest forward score and that score are found by the forward score calculation. Similarly, the word sequence of the highest backward score and that score are found by the backward score calculation.

Then, the highest scores in both forward and backward score calculations are compared at step S13, and the word sequence of the higher score can be ultimately selected at step S14.

The method for carrying out similar score calculation can be also applied to the case where there is a language restriction having a plurality of initial nodes or final nodes, other than that of Fig.2. In such case, a plurality of word sequence and scores corresponding thereto are found in the forward score calculation of step S11 and in the backward score calculation of step S12.

Therefore, if the same word sequence is included in both calculation processes, the better one of the forward score and the backward score can be set as the final score of the word sequence at step S13, similarly to the case of the above-described word recognition. Finally, at step S14, the word sequence of the best score of all the word sequence that have been found, or a plurality of upper candidates can be selected.

Supplementary explanation of the first embodiment will now be given. As the supplementary explanation of the first embodiment, the state transition network will be described further in detail.

In the first embodiment, the technique of preparing two state transition networks used for the score calculation, that is, one for the forward score calculation and the other for the backward score calculation, is described.

This is because the precision of each score calculation is improved by preparing the state transition network that is most suitable for each score calculation in view of the fact that the forward score calculation and the backward score calculation are carried out independently.

Particularly in the first embodiment, the preparation of two state transition networks is realized by using the technique of bundling common parts at the beginning of the words included in the language model 4 and the technique of bundling common parts at the ending of the words.

In general, as the state transition networks, a state transition network in which the transition destination from a certain state can be uniquely determined under a certain transition condition, and a state transition network in which a plurality of transition destinations exist, can be considered.

For example, in the network shown in Fig.4, the transition from the start to $p_1$ cannot be uniquely determined. Fig.4 shows the network of the following acoustic models as described above with respect to the transition between words shown in Fig.2.

$w_1$: $p_1$ $p_2$ $p_4$ $p_7$ $p_9$
$w_2$: $p_1$ $p_2$ $p_5$ $p_8$ $p_9$
$w_3$: $p_1$ $p_3$ $p_6$ $p_8$ $p_9$

Fig.5 shows the case where each acoustic model in Fig.4 is constituted by three states as shown in Fig.3. On the contrary, in the network shown in Fig.6, the transition from the start to $p_1$ can be uniquely determined.

As methods for transforming a network in which the transition destination cannot be uniquely determined to a network in which the transition destination can be uniquely determined, there are already proposed several algorithms such as a method of bundling common parts at the beginning or the ending of the word as described above so as to constitute a tree structure, and a method of transformation from a non-deterministic automaton to a deterministic automaton.

Thus, state transition networks suitable for the forward score calculation of step S11 and for the backward score calculation of step S12 will now be considered.

The forward score calculation can be regarded as a process of calculating the cumulative score from the initial node in the temporally forward direction from the time t = 1. In this sense, it is understood that a state transition network obtained by bundling sequentially from the initial node the transition destinations that cannot be uniquely determined can be used for the forward score calculation.

Similarly, the backward score calculation can be regarded as a process of calculating the cumulative score from the final node in the temporally backward direction from the time t = T . In this sense, it is understood that a state transition network obtained by bundling sequentially from the final node the transition destinations that cannot be uniquely determined can be used for the backward score calculation.

Therefore, the two state transition networks to be prepared may be produced as a state transition network having the least possible ambiguity in the transition from the initial node and a state transition network having the least possible ambiguity in the transition from the final node.

The networks of Fig.11 and Fig.12 described in the first embodiment are examples thereof.

In the case where the speech recognition is to be realized by small-scale hardware, the use of such two different state transition networks may not be desired in terms of the efficient utilization of the memory.

In such case, a singe state transition network can be used instead. For example, in the problem of the connected speech recognition described in the first embodiment, that is, in the problem for determining one word sequence corresponding to an input speech from word sequence formed by combining the words $w_1$, $w_2$ and $w_3$ under the language restriction shown in Fig.2, a network in which the beginning and ending parts of the words are made common as shown in Fig.7 is constituted, and the nodes on the network are replaced by state transition models as acoustic models, thereby enabling preparation of the singe state transition network.

This network contains all the routes corresponding the following respective words as described above.

$w_1$: $p_1$ $p_2$ $p_4$ $p_7$ $p_9$

$w_2$: $p_1$ $p_2$ $p_5$ $p_8$ $p_9$

$w_3$: $p_1$ $p_3$ $p_6$ $p_8$ $p_9$

Thus, using this network, the forward score calculation of step S11 and the backward score calculation of step S12 described in Fig.10 can be carried out. The subsequent comparison of the scores at step S13 and selection of the word sequence at step S14 may be carried out similarly to the first embodiment.

A second embodiment of the present invention will now be described.

In the above-described first embodiment, as shown in Fig.10, the technique is described which is adapted for independently carrying out the forward score calculation of step S11 and the backward score calculation of step S12, setting the better one of the forward score and the backward score as the final score for the corresponding word sequence at step S13, and finally selecting and outputting the word sequence of the highest final score or a plurality of upper candidates.

In the case where the forward score calculation of step S11 and the backward score calculation of step S12 are carried out completely independently, duplicate calculations might be carried out in the respective score calculations. Thus, a technique of making these duplicate calculations common will be described in the second embodiment.

In the description of the conventional technique, the calculation method using the equation (1) or (2) is described as the cumulative score calculation formula. It is already explained that the local similarity $d_i(x_t)$ is accumulated in these equations.

This local similarity $d_i(x_t)$ is calculated as a value expressing the similarity to the feature parameter $x_t$ by using an evaluation scale defined in each state $s_i$ of the state transition network.

Since the evaluation scale defined in each state $s_i$ is provided, for example, as a value calculated from a distance from the template, a probability density function or a neural net, the parameter of calculation for finding the evaluation value may be very large in some cases.

Actually, multi-dimensional normal distribution as expressed by the following equation may be used for the calculation formula.

$$d_i(x) = \frac{1}{(2\pi)^{n/2}|\Sigma_i'|^{1/2}} e^{-\frac{1}{2}(x-\mu_i)^T \Sigma_i^{-1}(x-\mu_i)}$$

$$\dots (3)$$

To carry out the calculation of the evaluation value using a function such as in the equation (3) with respect to each state i, an extremely large parameter of calculation is necessary. In this equation, $\mu_i$ and $\Sigma_i$ represent an average vector and a covariance matrix, respectively, defined in the state i.

Meanwhile, the calculation of the local similarity $d_i(x_t)$ at a time t required in the forward score calculation of step S11 and that required in the backward score calculation of step S12 should be perfectly the same if the same evaluation formula is used.

For example, in the case where the calculation of the evaluation value $d_i(x_t)$ in a state $s_i$ must be carried out in the forward score calculation process and the calculation of the evaluation value $d_j(x_t)$ in a state $s_j$ must be carried out in the backward score calculation process, if the evaluation formulas $d_i(x_t)$ and $d_i(x_t)$ are the same, the same calculation is to be carried out. Thus, it should be considered to make these calculations common.

In general, the combination of all the evaluation formulas

$$d_i(x) \ (i = 1, 2, ..., N)$$

defined on the state transition network used for carrying out the forward score calculation of step S11, and the combination of all the evaluation formulas

$$d_j(x) \ (i = 1, 2, ..., N)$$

defined on the state transition network used for carrying out the backward score calculation of step S12 should be perfectly the same if the same acoustic models are used.

Thus, in the case where the calculation of the evaluation value $d_i(x_t)$ is carried out in either one of the forward score calculation and the backward score calculation, the result of the calculation is stored in a table, from which the calculation result is referred to when the same calculation is required in the other calculation. Thus, it is possible to avoid duplication of the same calculation.

That is, with respect to an evaluation formula once used for carrying out calculation of the evaluation value with respect to a certain feature parameter included in the feature parameter sequence, of the evaluation formulas used for carrying out evaluation of the acoustic similarity to each feature parameter, the calculation result is stored in a table. When the calculation using the same evaluation formula with respect to the same feature parameter is subsequently required, the calculation result stored in the table is used.

In the case where the recognition process is carried out while the speech is taken in with respect to an audio signal inputted from a microphone, the backward score calculation of step S12 can be started only at the end point of the utterance. However, if it is possible to calculate the evaluation value $d_j(x_t)$ at each time synchronously with the input of the speech with respect to the combination of all the evaluation formulas

$$d_j(x) = (j = 1, 2, ..., N)$$

defined on the state transition network, storing all the calculation results into a table enables obtaining the evaluation value $d_j(x_t)$ only by referring to the table at the time of the backward score calculation.

As a matter of course, since the states for which the score calculation should be carried out are restricted in the backward score calculation process, it is not necessary to calculate the evaluation value $d_j(x_t)$ with respect to all the evaluation formulas. However, whether the evaluation value must be calculated or not is determined through the backward score calculation process and therefore cannot be determined at least before the end point of the utterance.

Thus, if it is possible to calculate the evaluation value $d_j(x_t)$ during the utterance with respect to all the evaluation formulas, the calculation thereof in advance enables reduction in the time required for determining the word sequence of the highest score after the end of the utterance at step S14.

That is, with respect to the all the evaluation formulas used for evaluating the acoustic similarity to each feature parameter, the evaluation value with each feature parameter included in the feature parameter sequence is calculated independently of the processing for accumulating the evaluation value, and the calculation result is stored in the table.

Moreover, by actually carrying out the backward score calculation in advance using a large parameter of test data, it is possible to examine the frequency at which each evaluation formula $d_j(x_t)$ is calculated with respect to all the evaluation formulas.

$$d_j(x) = (j = 1, 2, ..., N)$$

Thus, on the basis of the frequency distribution, only an evaluation formula $d_j(x_t)$ of a high frequency is calculated synchronously with the input of the speech, and the calculation result is stored in the table.

That is, instead of calculating the evaluation value with respect to all the evaluation formulas, the frequency at which reference to the table is made in the process of accumulating the evaluation value is estimated in advance, and the calculation of the evaluation value with the feature parameter that is actually obtained is carried out only with respect to an evaluation formula of a high frequency. The calculation result thereof is stored in the table.

Also, the evaluation value $d_i(x_t)$ found in the forward score calculation is stored in the table. Then, at the time of the backward score calculation, the table is referred to in search of the evaluation values that have already been calculated, and the calculation is actually carried out with respect to the other evaluation values.

As a result a part of the calculation of the evaluation value $d_j(x_t)$ necessary in carrying out the backward score calculation can be omitted. Therefore, again it is possible to reduce the time required for determining the word sequence of the highest score after the end of the utterance at step S14.

Furthermore, in carrying out the forward score calculation and the backward score calculation, the calculation of the cumulative score itself may be duplicated in some cases.

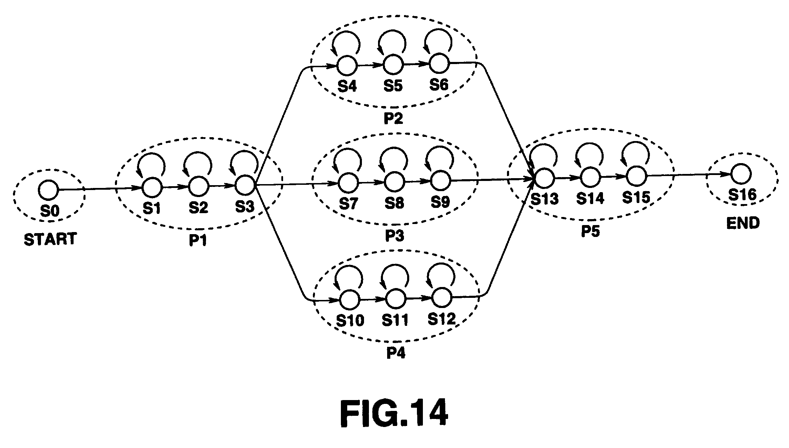

For example, the calculation using the state transition network as shown in Fig.14 will be considered. In the case where the forward score calculation of step S11 is carried out using this network, since a cumulative score $\alpha_i(t)$ is found with respect to a state $s_i$ for which the score calculation is carried out at a time t, this cumulative score can be stored in a table. At the same time, the route through which the calculation of the cumulative score has been carried out can also be stored.

For example, in the case where the calculation of the cumulative score using the equation (2) described in the conventional technique, that is, the calculation using the Viterbi algorithm is carried out, the state $s_j$ from which transition has been made can be determined at the same time as the calculation of $\alpha_i(t)$. The state $s_j$ of the transition source can be stored at the same time as $\alpha_i(t)$. This is expressed herein as $B_i(t)$.

Normally, the cumulative score $\alpha_{16}(T)$ in the final state $s_{16}$ is found by calculating the cumulative score from a time $t = 1$ to a time $t = T$. Therefore, by setting this cumulative score as the forward score and tracing back to the transition source in the temporally backward direction from the transition source $B_{16}(T)$ determined at the final time $t = T$ in the final state $s_{16}$, one route for providing the forward score $\alpha_{16}(T)$ is determined.

In the following description, it is assumed that the cumulative score $\alpha_i(t)$ and the transition source $B_i(t)$ are stored with respect to all the states. However, it is also possible to store these values, for example, only with respect to a state representing the end of a word.

A state $s_5$ will now be considered. If the score calculation of this state is carried out at a time $t = t_1$, a cumulative score $\alpha_5(t_1)$ and a transition source $B_5(T_1)$ are stored.

The cumulative score $\alpha_5(t_1)$ represents the cumulative score from the time $t = 1$ to the time $t = t_1$, and the route for providing this score can be obtained by tracking back to the transition source in the temporally backward direction from $B_5(T_1)$. Particularly in this example, the route from the initial node $s_0$ to the state $s_5$ can be uniquely determined.

Since the forward score calculation is carried out while restricting, at each time, the states for which the score calculation should be carried out, the cumulative score $\alpha_5(t_1)$ does not necessarily coincide with the score obtained in the case where the score calculation is carried out with respect to all the states.

However, as the score calculation has been carried out, there is a high possibility that transition has been made with high scores. Therefore, it can be expected that the resultant cumulative score has a value close to the value obtained in the case where the score calculation is carried out with respect to all the states.

Accordingly, even if the calculation of the cumulative score is carried out from the state $s_5$ to the state $s_0$ in the temporally backward direction from the time $t = t_1$ to the time $t = 1$, it can be expected that the resultant value is close to $\alpha_5(t_1)$.

If the value is coincident with $\alpha_5(t_1)$, it should be understood that the calculation is completely duplicated.

Thus, in the case where the backward score calculation of step S12 is carried out in the state transition network shown in Fig.14, if the cumulative score $\alpha_i(t_1)$ at a time $t_1$ in a state $s_i$ is already determined in the forward score calculation, the calculation of the cumulative score from the state $s_i$ toward the initial node $s_0$ will be omitted.

However, it should be noted that this calculation is omitted only in the case where the route from the initial node $s_0$ to the state $s_i$ can be uniquely determined on the state transition network. For example, the route from $s_0$ to $s_5$ can be uniquely determined but the route from $s_0$ to $s_{13}$ cannot be uniquely determined. Therefore, even if the cumulative score $\alpha_{13}(t_1)$ is found in the state $s_{13}$, the subsequent score calculation will not be omitted.

Then, in carrying out such omission of the cumulative score calculation, $\alpha_i(t_1)$ obtained in the forward score calculation process and the cumulative score value on transition to the state $s_i$ at the time $t_1$ in the backward score calculation process are added, and the resultant value is stored as one candidate for the backward score.

Moreover, by combining the route from the initial node $s_0$ to the state $s_i$ and the route from the state $s_i$ to the final node $s_{16}$ determined in the backward score calculation process, one route from the initial node to the final node can be obtained. Therefore, the word sequence represented by that route is set as the word sequence corresponding to the previously stored score.

As a result, several word sequence candidates and backward scores corresponding thereto are to be found on completion of the backward score calculation.

Thus, the word sequence of the highest score is newly selected as the word sequence determined in the backward score calculation of step S12. The subsequent comparison of the forward and backward scores at step S13 and determination of the final word sequence at step S14 are as described above.

As described above, in the case where the route to the initial node $s_0$ cannot be uniquely determined on the state transition network as in the state $s_{13}$ of Fig.14, the subsequent calculation of the cumulative score is not omitted. This is because there is a possibility that the backward score calculation in the case where a plurality of routes can be considered may provide a higher score with respect to a route which is different from the route obtained by the forward score calculation.

Since the present invention is aimed at finding such a route that cannot be obtained by the forward score calculation, by means of the backward score calculation, such calculation cannot be omitted.

A third embodiment of the present invention will now be described.

In the foregoing second embodiment, the technique is described in which duplicated calculations are made common in the forward score calculation of step S11 and the backward score calculation of step S12. In the following, the case is further described where the recognition process is carried out while a speech is inputted with respect to an audio signal inputted from a microphone.

As described above, the backward score calculation of step S12 can be started only at the end point of the utterance. Therefore, even if the forward score calculation ends at the same time as the end of the utterance, the output of the recognition result is delayed by a time period equal to the calculation time required for the backward score calculation.

This means that in the case where an equipment or the like is operated by using the result of speech recognition, a delay in the response is generated. In this sense, it can be said that the parameter of calculation required for the backward score calculation should be as small as possible.

Thus, a technique is considered such that the restriction on the states for which the score calculation should be carried out is moderated in carrying out the forward score calculation while the restriction on the state for which the score calculation should be carried out is strengthened in carrying out the backward score calculation.

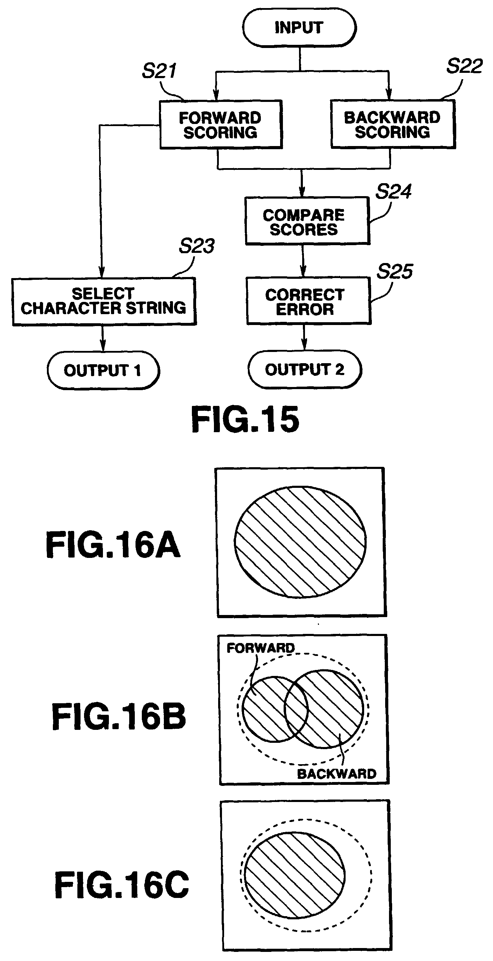

Also, as shown in Fig.15, on completion of the forward score calculation of step S21, the word sequence of the best forward score or a plurality of upper candidates are found at step S23 and the result thereof is outputted. After that, on completion of the backward score calculation of step S22, the comparison between the forward score and the backward score as described above is carried out at step S24. If the result is different from the recognition result determined by the forward score calculation, the result is corrected at step S25 and then outputted. If there is no difference in the result a signal indicating that the already outputted recognition result is correct is outputted.

With such structure, it is possible to carry out processing using the result of the forward score calculation of step S21 even before the completion of the backward score calculation of step S22.

For example, in a system for recognizing a place name and then retrieving and displaying a corresponding map, processing such as retrieval and reading of map information, which must be carried out for displaying the map, can be carried out on the basis of the result of the forward score calculation.

If there is an error in the result of the forward score calculation, the retrieval of the map can be carried out again. If there is no error, the display of the map based on the result of the forward score calculation can be carried out.

Consequently, if there is no error, the time required for displaying the map after the end of the utterance is reduced.

The concept of the embodiment of the present invention will now be described with reference to Figs.16A, 16B and 16C. In Figs.16A to 16C, shaded parts represent the utterance for which correct word sequence have been found, and the other parts represent the utterance for which correct word sequence have not been found.

Fig.16A shows the case where the score calculation is carried out with respect to all the states on the state transition network.

Normally, the rate at which correct word sequence are found is reduced by limiting the number of states for which the score calculation should be carried out. Therefore, in order to improve this rate, a technique of moderating the limitation is conventionally used.

On the other hand, the technique described in the foregoing embodiment corresponds to Fig.16B. Specifically, in the embodiment of the present invention, the rate at which correct word sequence are found is improved by the results of both the forward score calculation and the backward score calculation.

As a result, in the forward score calculation and the backward score calculation, it is possible to avoid large reduction in the ultimate rate of correct answer even in the case where the number of states for which the cumulative score calculation should be carried out is significantly limited.

Fig.16C shows the case where the score calculation is carried out while simply limiting the number of state for which the cumulative score calculation should be carried out as in the conventional technique. Thus, compared with Fig.16B corresponding to the conventional technique, the total parameter of calculation required for achieving the same rate of correct answer is smaller.

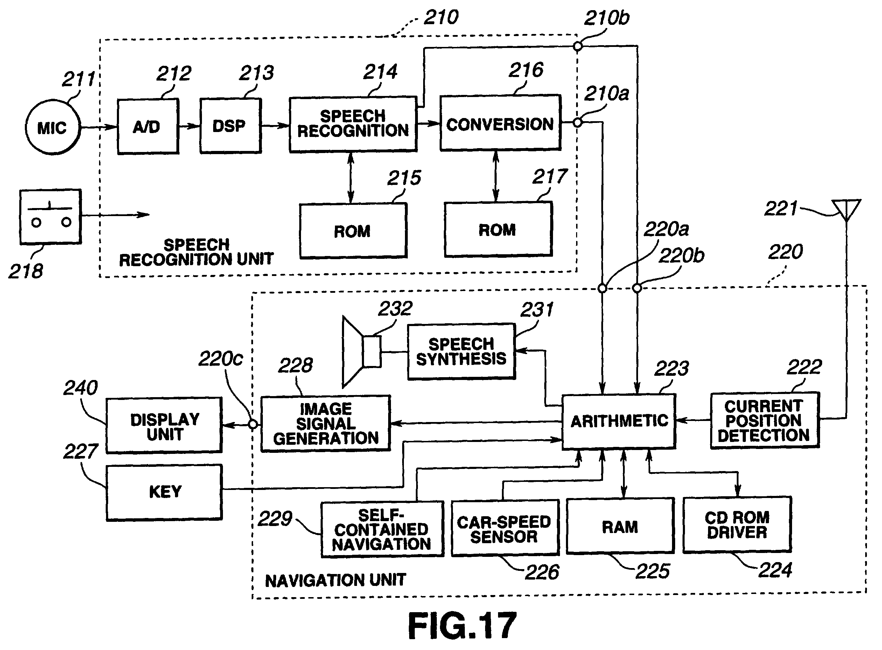

A specific example in which the above-described speech recognition is applied to a car navigation system will now be described with reference to Fig.17.

In this example, a speech recognition unit 210 is connected to a navigation unit 220. A microphone 211 is connected to the speech recognition unit 210. As the microphone 211, there is employed a microphone having a relatively narrow directivity and adapted for satisfactorily picking up only the speeches of a person seated in a driver's seat of an automobile.

An audio signal picked up by the microphone 211 is supplied to an analog/digital converter 212, where the audio signal is converted to a digital audio signal having a predetermined sampling frequency. The digital audio signal outputted by the analog/digital converter 212 is supplied to a digital audio processing circuit 213 having an integrated circuit structure called DSP (digital signal processor). The digital audio processing circuit 213 forms vector data from the digital audio signal by means of processing such as band splitting and filtering, and supplies the vector data to a speech recognition circuit 214.

The speech recognition circuit 214 is connected with a speech recognition data storage ROM 215. The speech recognition circuit 214 carries out recognition operation in accordance with a predetermined audio recognition algorithm (e.g., HMM or hidden Markov model) with the vector data supplied from the digital audio processing circuit 213, then selects a plurality of candidates from speech recognition phoneme models stored in the ROM 215, and reads out character data stored and corresponding to the phoneme model of the highest conformity of all the candidates.

The data storage state of the speech recognition data storage ROM 215 of this example will now be described. In this example, only place names and words instructing the operation of the navigation unit are to be recognized. As the place names, only the names of prefectures and the names of cities, wards, towns and villages in Japan are registered. For each prefecture and each city, ward, town or village, a character code of the place name and a phoneme model as data for enabling speech recognition of the place name are stored.

If a character code corresponding to a phoneme model which is coincident with the result of recognition obtained from the input vector data through the predetermined speech recognition algorithm by the speech recognition circuit 214 is a character code of a place name, this character code is read out from the ROM 215. The character code thus read out is supplied to a longitude/latitude conversion circuit 216. This longitude/latitude conversion circuit 216 is connected with a longitude/latitude conversion data storage ROM 217 and reads out longitude/latitude data corresponding to the character data supplied from the speech recognition circuit 214 and accompanying data thereof from the ROM 217.

The speech recognition algorithm in the speech recognition unit 210 is adapted for analyzing a speech and carrying out the recognition process using acoustic models and a language model, as described above. The speech recognition algorithm includes first scoring for evaluating evaluation target models in the forward order while restricting the evaluation models, second scoring for evaluating the models in a similar manner but in the backward order, and selection of a candidate word based on the evaluation in the first and second scoring. The speech recognition is already described in detail and therefore will not be described further.

Since the speech recognition unit can find the word sequence as the recognition result at a high speed by using such speech recognition algorithm, the burden on the user at the time of input is reduced.

The longitude/latitude data and the accompanying data read out from the longitude/latitude conversion data storage ROM 217 are supplied to an output terminal 210a as an output of the speech recognition unit 210. The data of the character code of the input speech with its coincidence detected by the speech recognition circuit 214 is supplied to an output terminal 210b as an output of the speech recognition unit 210. The data obtained at the output terminals 210a and 210b are supplied to the navigation unit 220.

In the speech recognition unit 210 of this example, a talk switch 218 is provided which is a non-locked make and break switch (i.e., a switch which is in an ON-state only when being pressed). Only with respect to an audio signal picked up by the microphone 211 while the talk switch 218 is being pressed, the above-described processing is performed by the circuits from the analog/digital converter 212 to the longitude/latitude conversion circuit 216.

The structure of the navigation unit 220 connected to the speech recognition unit 210 will now be described. This navigation unit 220 has a GPS antenna 221. A fix signal from a GPS satellite, received by the antenna 221, is processed by receiving processing by a current position detection circuit 222, and the received data is analyzed to detect the current position. The detected current position data is latitude and longitude data which represent the absolute position at the time.

The detected current position data is supplied to an arithmetic circuit 223. This arithmetic circuit 223 is a circuit functioning as a system controller for explaining the operation of the navigation unit 220. The arithmetic circuit 223 is connected with a CD-ROM driver 224 for setting thereon a CD-ROM (optical disc) having road map data stored therein and for reading the stored data of the CD-ROM, a RAM 225 for storing various data necessary for data processing, a car-speed sensor 226 for detecting the motion of a vehicle on which this navigation unit is mounted, and an operating key 227. When the coordinate data of longitude and latitude of the current position or the like are obtained, the arithmetic circuit 223 controls the CD-ROM driver 224 to read out the road map data in the vicinity of that coordinate position. Then, the road map data read out by the CD-ROM driver 224 is temporarily stored in the RAM 225, and display data for displaying the road map is prepared using the stored road map data. In this case, display data for displaying the map on a display scale set by the operation of the operating key 227 arranged at a predetermined position in the automobile is prepared.

Also, the arithmetic circuit 223 controls switching of various modes on the basis of the speech recognition information recognized by the speech recognition unit 210. These modes include, for example, display of graphic information of the map, display of character information relating to the position and the like.

Then, the display data prepared by the arithmetic circuit 223 is supplied to an image generation circuit 228, where an image signal of a predetermined format is generated on the basis of the display data. The image signal is supplied to an output terminal 220c.

The image signal outputted from the output terminal 220c is supplied to a display unit 240, where image receiving processing based on the image signal is carried out, thus displaying the road map or the like on a display panel of the display unit 240.

In addition to such display of the road map in the vicinity of the current position, a road map of a position designated by the operation of the operation key 227 or the like can also be displayed under the control of the arithmetic circuit 223. Also, in the case where specified coordinate positions such as "destination", "starting place", "transit place" and "home" are registered in accordance with the operation of the operating key 227, the data (longitude and latitude) of the registered coordinate positions are stored in the RAM 225.

When the car-speed sensor 226 has detected the travelling of the automobile, the arithmetic circuit 223 accepts no operation except for relatively simple operations of the operating key 227.

The navigation unit 220 also has a self-contained navigation section 229. The correct travelling speed of the automobile is calculated on the basis of a pulse signal corresponding to the vehicle speed supplied from an engine control computer or the like of the automobile, and the travelling direction is detected on the basis of the output of a gyro sensor inside the self-contained navigation section 229. Thus, the current position is fixed by the self-contained navigation method from a position determined on the basis of the speed and travelling direction. For example, when position detection cannot be carried out by the current position detection circuit 222, the position is fixed by the self-contained navigation method from the last position that could be detected by the current position detection circuit 222.

The arithmetic circuit 223 is also connected with a speech synthesis circuit 231. In the case where any instruction by speech is necessary for the arithmetic circuit 223, synthesis processing of such speech instruction is executed by the speech synthesis circuit 231, and the speech is outputted from a speaker 232 connected with the speech synthesis circuit 231. Various instructions which are necessary as the function of the navigation unit, for example, "we have arrived at the destination" or "please go left", are given by speech. The speech synthesis circuit 231 also carries out speech synthesis processing of the speech recognized by the speech recognition unit 210, on the basis of the character data supplied thereto, and outputs the speech from the speaker 232. This processing will be described later.

The navigation unit 220 has input terminals 220a, 220b supplied with the longitude and latitude data and accompanying data thereof, and the character code data, respectively, outputted from the output terminals 210a, 210b of the speech recognition unit 210. The longitude and latitude data and accompanying data thereof, and the character code data are supplied to the arithmetic circuit 223.

The arithmetic circuit 223 controls the CD-ROM driver 224 to read out road map data in the vicinity of the longitude and latitude from the disc when the longitude and latitude data and the like are supplied from the speech recognition unit 210. Then, the road map data read out by the CD-ROM driver 224 is temporarily stored in the RAM 225, and display data for displaying the road map is prepared by using the stored road map data. In this case, display data for mainly displaying the supplied latitude and longitude, and display data for displaying the map on a scale designated by the display scale accompanying the longitude and latitude data are prepared.

On the basis of the display data, an image signal is generated by the image signal generation circuit 228 and the road map of the coordinate position designated from the speech recognition unit 210 is displayed on the display unit 240.

In the case where a character code of a word or words designating the operation of the navigation unit is supplied from the output terminal 210b of the speech recognition unit 210, when the character code of the word designating the operation is discriminated by the arithmetic circuit 223, the arithmetic circuit 223 carries out the corresponding control. If the character code is a character code of a word designating a display position such as "destination", "starting place", "transit place" or "home", the arithmetic circuit 223 determines whether or not the coordinate of this display position is registered to the RAM 225. If it is registered, the arithmetic circuit 223 controls the CD-ROM driver 224 to read out the road map data in the vicinity of the position from the disc.

Also, in the case where the display position such as "destination", "starting place", "transit place" or "home" is to be registered, a speech such as "register destination" can be recognized and set. In the case where these positions are to be registered, when the registration is designated, a cursor position on a map displayed on the display unit 240 (a mark displayed at an arbitrary position in the map in accordance with a predetermined operation of the operating key 227) is set as the registered position. When a destination or a transit plate is registered, the arithmetic circuit 223 automatically carries out route setting to that position. Specifically, a position registered as home or a current position detected by the current position detection circuit 222 is assumed as a starting point, and a route to that position which is considered most appropriate is automatically found by arithmetic processing. In this case, if road state data such as traffic jam information is obtained from outside, the route setting may be carried out in consideration of such data.

When data of a character code indicating the pronunciation of a recognized speech is supplied from the speech recognition unit 210 to the arithmetic circuit 223, the word indicated by the character code is synthesized by the speech synthesis circuit 231 and outputted as a speech from the speaker 232 connected to the speech synthesis circuit 231. For example, when a speech of "toukyouto bunkyouku" (Bunkyo Ward, Tokyo) is recognized on the side of the speech recognition unit 210, synthesis processing for generating audio signals for pronouncing "toukyouto bunkyouku" is carried out by the speech synthesis circuit 231 on the basis of the data of the character string of the recognized pronunciation, and the generated audio signals are outputted from the speaker 232.

In this specific example, in the case where the speech recognition is carried out by the speech recognition unit 210, the data of the latitude and longitude are supplied to the terminal 220a of the navigation unit 220, and substantially at the same time, the data of the character code indicating the pronunciation of the recognized speech is supplied to the terminal 220b. However, the arithmetic circuit 223 first causes the speech synthesis circuit 231 to execute the processing for speech-synthesizing the recognized word, and then causes execution of the preparation processing for the display data of the road map based on the longitude and latitude data.

EP 1 024 476 A1

The state of installation when the units of this specific example are mounted on an automobile will now be described.

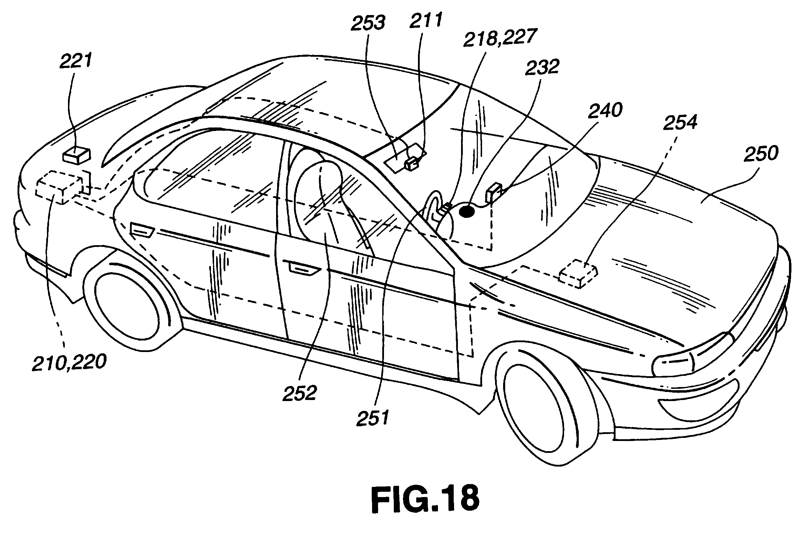

As shown in Fig.18, an automobile 250 has a steering wheel 251 provided on the forward side of a driver's seat 252 and is constituted so that basically a driver seated in the driver's seat 252 operates the navigation unit. In some cases, however, another person in the same automobile 250 operates the navigation unit. The speech recognition unit 210 connected to the navigation unit body 220 is installed in an arbitrary space (e.g., in a rear trunk) within the automobile 250, and the fix signal receiving antenna 221 is mounted on the outer side of the car body (or within the car such as on the inner surface of the rear window).

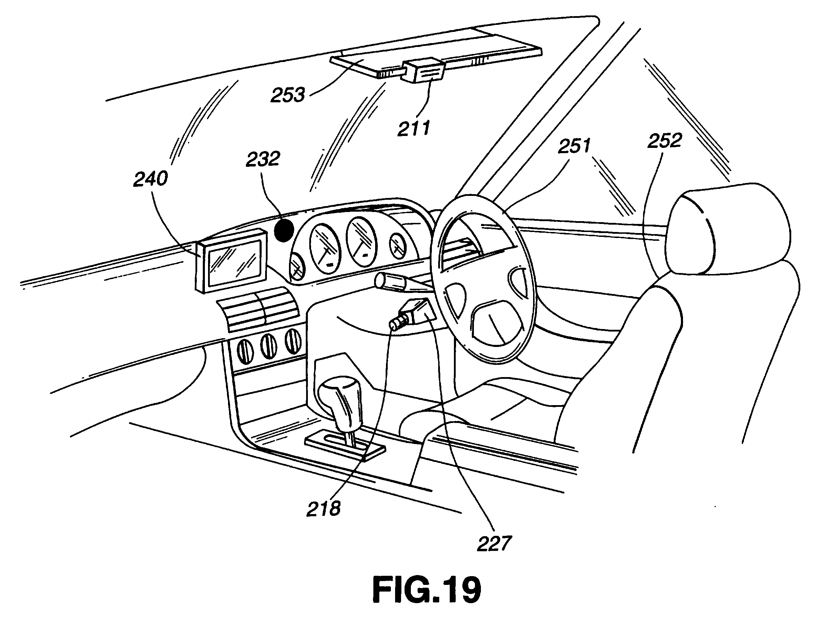

As shown in Fig.19, which shows the vicinity of the driver's seat, the talk switch 281 and the operating key 227 of the navigation unit, which will be described later, are arranged by the side of the steering wheel 251. These switch and key are arranged so as not to cause any disturbance if operated during driving. The display unit 240 connected to the navigation unit is arranged at a position where it does not disturb the forward sight of the driver. The speaker 232 for outputting an audio signal synthesized within the navigation unit 220 is mounted at a position from where an output speech can reach the driver (e.g., by the side of the display unit 240).

Since the navigation unit of this example enables speech input, the microphone 211 is mounted on a sun visor 253 arranged at an upper part of the windshield in front of the driver's seat 252 and is adapted for picking up the speech of the driver seated in the driver's seat 252.

Also, the navigation unit 220 of this example is connected to an engine control computer 254 of this automobile and is supplied with a pulse signal proportional to the car speed from the engine control computer 254.

As described above, this example includes the current position detection circuit 222 for detecting the current position of the vehicle, the car-speed sensor 226, direction detection means for detecting the travelling direction of the vehicle on the basis of the self-contained navigation section 229, the CD-ROM driver 224 housing therein a CD-ROM in which road map information is stored, the microphone 211 for inputting an audio signal, and the speech recognition unit 210.

This example also includes the arithmetic circuit 223 for calculating current position information corrected to locate the current position of the vehicle on the road on the basis of the current position of the vehicle detected by the current position detection circuit 222 and the road map information read out from the CD-ROM, then reading out the road map information from the CD-ROM on the basis of the calculated current position information, and controlling the operating state on the basis of the speech recognition information obtained from the speech recognition unit 210, and the display unit 240 for displaying the current position of the current position information on the road map read out from the storage means.

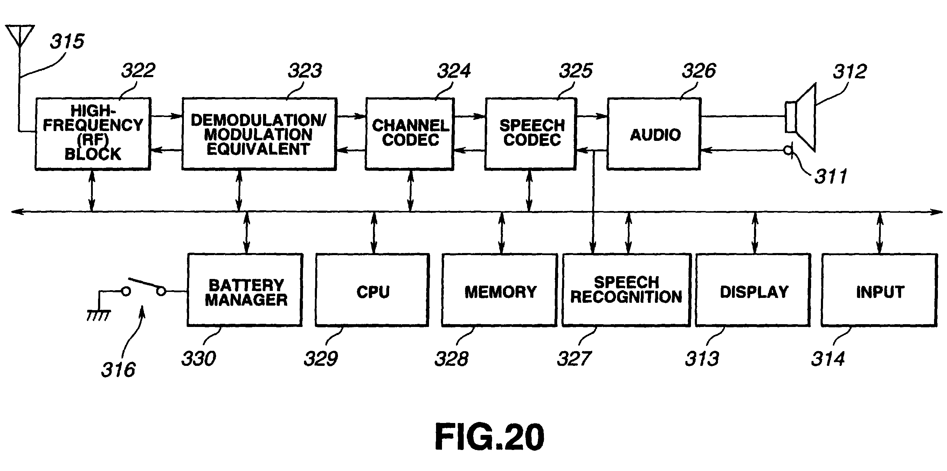

A specific example in which the above-described speech recognition is applied to a portable telephone unit will now be described with reference to Fig.20.

In a portable telephone unit, an antenna 315 is connected to a high-frequency block 322. The high-frequency block 322 is sequentially connected with a demodulation/modulation equivalent circuit 323, a channel codec circuit 324, a speech codec circuit 325, and an audio circuit 326. The audio circuit 326 is connected with a microphone 311 and a speaker 312. A CPU 329 controls the operation of the whole unit. A memory 328 stores necessary data at any time.

In the portable telephone unit, a speech recognition circuit 327 is adapted for recognizing an audio signal inputted from the microphone 311 via the audio circuit 326.

The speech recognition in the speech recognition circuit 327 is to analyze a speech and to carry out the recognition process using acoustic models and a language model, as described above. This speech recognition includes first scoring for evaluating evaluation target models in the forward order while restricting the evaluation models, second scoring for evaluating the models in a similar manner but in the backward order, and selection of a candidate word based on the evaluation in the first and second scoring. The speech recognition is already described in detail and therefore will not be described further.

In the portable telephone unit, a display section 313 displays information such as characters. Information is inputted to an input section 314 by a key operation. A battery manager 330 supplies necessary power to each section from a built-in battery in response to the operation of a power-supply switch 316.

When the power-supply switch 316 is turned on to supply necessary power to each section from the battery manager 330, the CPU 329 sets an idle mode as an initial state. When this idle mode is set, the CPU 329 causes the display section 313 to display a symbol of IDLE indicating tat the unit is in the idle mode.

As a call signal arrives in this state, the call signal is received by the high-frequency block 322 and then demodulated by the demodulation/modulation equivalent circuit 323. The demodulation output is supplied to the channel codec circuit 324, where it is decoded. On determining that the decoded data is a call signal of this unit, the CPU 329 controls the speech codec circuit 325 to generate a call-in tone. This call-in tone is outputted from the speaker 312 via the audio circuit 326. At this point, the CPU 329 also controls the display section 313 to flash a display of CALL indicating that a call is being made.

From the call-in tone from the speaker 312 or the flashing of the characters CALL, the user recognizes that there is a call. In response to this, the user pronounces "receive call", for example. This audio signal is inputted via the microphone 311 and the audio circuit 326 to the speech recognition circuit 327.

The speech recognition circuit 327 determines that the audio signal of "receive call" is the user's intention to accept the call, and notifies the CPU 329 of it.

In response to this, the CPU 329 controls the channel codec circuit 324 to generate a signal indicating that the call should be accepted. This signal is modulated by the demodulation/modulation equivalent circuit 323 and transmitted from the high-frequency block 322 via the antenna 315. On receiving this detection signal, the central telephone exchange as the base station connects the telephone line.

The user also can input his/her intention to accept the call by pressing a key of the input section 314. That is, when the user presses a receive key of the input section 314, the CPU 329 similarly carries out the processing for connecting the telephone line.

After the telephone line is connected, radio waves received by the high-frequency block 322 via the antenna 315 are demodulated by the demodulation/modulation equivalent circuit 323 and then decoded by the channel codec circuit 324. The audio data outputted from the channel codec circuit 324 is inputted to and decoded by the speech codec circuit 325. The audio data outputted from the speech codec circuit 325 is inputted to and D/A converted by the audio circuit 326 and then outputted from the speaker 312.

On the other hand, an audio signal inputted from the microphone 311 is A/D converted by the audio circuit 326 and then inputted to and encoded by the speech codec circuit 325. The audio data is inputted via the channel codec circuit 324 to the demodulation/modulation equivalent circuit 323, where it is modulated. The modulation signal is supplied to the high-frequency block 322 and outputted as an RF signal from the antenna 315. Thus, a normal conversation is held.

On completion of the conversation, the user pronounces "end conversation", for example. This audio signal is inputted via the microphone 311 and the audio circuit 326 to the speech recognition circuit 327.

The speech recognition circuit 327 determines that the audio signal of "end conversation" is the user's intention to end the call, and notifies the CPU 329 of it. The CPU 329 outputs a signal indicating that the call should be ended. On receiving this signal, the central telephone exchange as the base station opens the telephone line.

The user also can input his/her intention to end the call by pressing a key of the input section 314. That is, when the user presses an end key of the input section 314, the CPU 329 similarly carries out the processing for opening the telephone line.

On receiving the speech recognition information to the effect that the telephone line should be opened from the speech recognition circuit 327, the CPU 329 shifts the mode from the reception mode to the idle mode. Thus, the CPU 329 automatically restores the display on the display section 313 to the display of the idle mode.

In the idle mode, if the user pronounces, for example, "dialing mode", this audio signal is inputted via the microphone 311 and the audio circuit 326 to the speech recognition circuit 327, and the recognized meaning of the signal is transmitted to the CPU 329. In response to this, the CPU 329 changes the mode from the idle mode to the dialing mode.

In the case where the dialing mode is set, a calling operation to a counterpart of a predetermined telephone number is started similarly to the above-described procedure by operating numeric keys of the input section 314 to enter the predetermined telephone number and ten pronouncing, for example, "send call". To end the call, the user can similarly pronounce "end conversation".

In the dialing mode, the telephone number can also be entered by pronouncing, for example, "1234...", instead of the key input using the input section 314. Also, the name of the counterpart can be pronounced to enter the telephone number of the counterpart.

In this case, the audio signal of the telephone number is inputted via the microphone 311 and the audio circuit 326 to the speech recognition circuit 327, where the audio signal is recognized as the telephone number. The recognized telephone number is sent to the CPU 329.

As described above, since word sequence are recognized at a high speed by the speech recognition circuit 327, the burden on the user in using the portable telephone unit is reduced. In the portable telephone unit, switching between the idle mode and the dialing mode and the communication operations such as call reception and calling are controlled on the basis of the result of recognition by the speech recognition circuit 327.

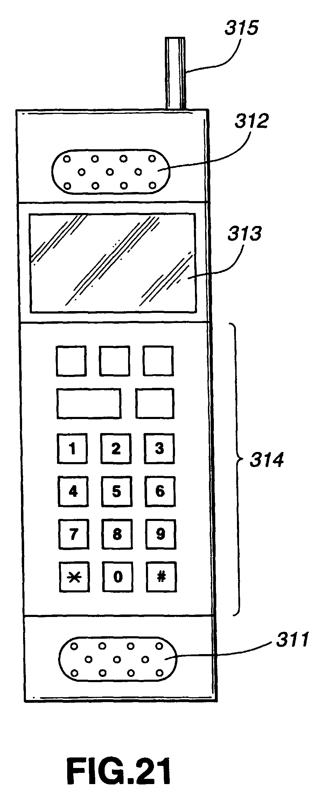

The appearance of the portable telephone unit will now be described with reference to Fig.21.

The speaker 312 is arranged at an upper part and the microphone 311 is arranged at a lower part on the front side of the portable telephone unit. Above the microphone 311, the input section 314 having various keys necessary for carrying out the calling operation is arranged. The liquid crystal display section 313 is provided between the input section 314 and the speaker 312. When the calling operation to a predetermined telephone number is carried out by operating the keys provided in the input section 314 or inputting a predetermined audio signal to the microphone, radio waves are emitted from the antenna 315 and these radio waves are received by the antenna 315 of the nearest central telephone exchange to call the counterpart. As the counterpart responds, the telephone line is connected to enable the call.

On the other hand, when a call signal is detected via the antenna 315 in the idle mode, a call-in tone is generated from the speaker 312. In this case, by inputting a predetermined audio signal to the microphone 311 or operating a predetermined key in the input section 314, the telephone line is connected to enable the call.

On the liquid crystal display section 313, the telephone number of the counterpart inputted by the user himself/herself and various messages concerning the operation are displayed. Also, the result of recognition by the speech recognition circuit 327 of the information inputted by means of an audio signal is displayed at any time.

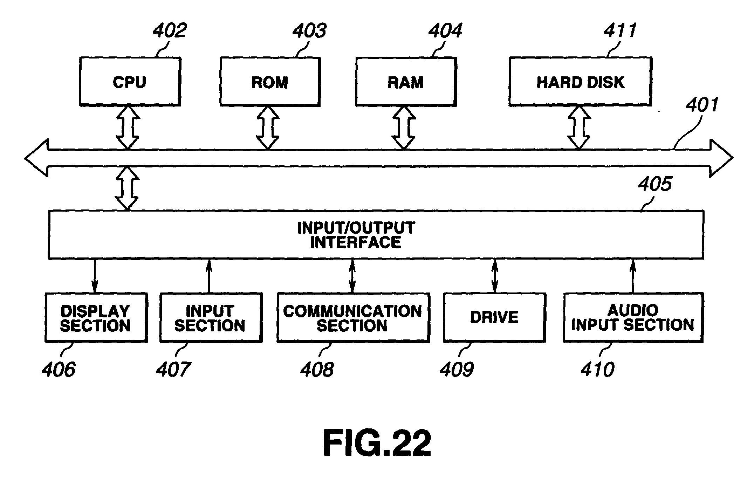

A specific example in which the above-described speech recognition is applied to an information processing device will now be described with reference to Fig.22.

This information processing device has a CPU 402 for executing arithmetic processing, a ROM 403, which is a non-volatile memory, a RAM 404, which is a volatile memory, and a hard disk 411, which is a fixed disk unit having a large capacity.

These CPU 402, ROM 403, RAM 404 and hard disk 411 are interconnected by a bus 401.

The CPU 402 executes arithmetic processing in accordance with the procedures of programs stored in the ROM 403 and RAM 404. For example, the CPU 402 executes the procedure of an application program. The CPU 402 has a speech recognition function, which will be described later.

In the ROM 403, a program to be executed at the time of boot when the information processing device is actuated is stored. In the RAM 404, an application program and data processed by the CPU 402 are stored. On the hard disk 411, data of a large volume such as audio data are stored.

The information processing device has an input/output interface 405 to be an interface between an input/output device and the bus 401, a display section 406 for displaying characters and images, an input section 407 to which information is inputted by key operation, a communication section 408 for carrying out communication with an external equipment a drive 409 for driving a removable disk such as a so-called flexible disk, and an audio input section 410 to which an audio signal is inputted.

As the display section 406, for example, a CRT is used and characters and images are displayed thereon under the control of the CPU. As the input section 407, for example, a keyboard is used and information is inputted by key operation.

The communication section 408 is adapted for carrying out communication with an external equipment, for example, in accordance with TCP/IP. The driver 409 carries out recording/reproduction of data to/from a removable disk such as a flexible disk.

To the audio input section 410, an audio signal is inputted through a microphone. The audio signal inputted to the audio input section 410 is speech-recognized by the CPU 402.

Specifically, the CPU 402 analyzes a speech inputted from the audio input section 410 and carries out the recognition process using acoustic models and a language model. The CPU 402 carries out first scoring for evaluating evaluation target models in the forward order while restricting the evaluation models, second scoring for evaluating the models in a similar manner but in the backward order, and selection of a candidate word based on the evaluation in the first and second scoring. The speech recognition is already described in detail and therefore will not be described further.

In the case where an application program is being executed, the CPU 402 recognizes an audio signal inputted to the audio input section 410 and controls the processing state of the program on the basis of the speech recognition information. For example, when an audio signal of "execute" is inputted to the audio input section, the CPU 402 executes specified processing. When a speech of "stop" is inputted, the CPU 402 stops the specified processing. Since such speech recognition realizes high-speed recognition of an audio input from the user, the burden on the user is reduced in comparison with the case where the user inputs information to the input section 407 by key operation.

As described above, according to the embodiment of the present invention, the speech recognition unit has an acoustic analysis section for extracting an acoustic feature parameter sequence with respect to an input audio signal, acoustic models which enable evaluation of similarity to a pattern of partial or entire feature parameter sequence of the speech using an evaluation formula for carrying out evaluation of acoustic similarity to individual feature parameters extracted by the acoustic analysis section, a language model for providing restrictions relating to the connection of the acoustic models, and a recognition process section for selecting a candidate which is most similar to the feature parameter sequence extracted by the acoustic analysis section or a plurality of upper candidates, from all the acoustic model arrays constituted by connecting the acoustic models in accordance with the language model. In this speech recognition unit, evaluation of the acoustic similarity to each feature parameter is sequentially carried out from the beginning point to the ending point of the feature parameter sequence with respect to all the acoustic model arrays, as evaluation targets, constituted by connecting the acoustic models in accordance with the language model, while the evaluation value is accumulated from the forward side toward the rear side of the acoustic model array, thus carrying out processing for providing a cumulative evaluation value with respect to several acoustic model arrays. Then, evaluation of the acoustic similarity to each feature parameter is sequentially carried out from the ending point to the beginning point of the feature parameter sequence with respect to the same evaluation targets as in the foregoing processing, that is, all the acoustic model arrays, as evaluation targets, constituted by connecting the acoustic models in accordance with the language model, while the evaluation value is accumulated from the rear side toward the forward side of the acoustic model array, thus carrying out processing for providing a cumulative evaluation value with respect to several acoustic model arrays. Furthermore, in carrying out the foregoing two types of processing, evaluation of the acoustic similarity to each feature parameter and accumulation of the evaluation value are carried out only with respect to a limited part of all the acoustic model arrays constituted by connecting the acoustic models in accordance with the language model. That is, calculation of the evaluation value and accumulation thereof are carried out while limiting the part for which the acoustic similarity to each feature parameter should be evaluated, of the all the acoustic model arrays to be the targets. All the combinations of the acoustic model array and cumulative evaluation value that are obtained in the two types of processing are added together. Of all the combinations of the acoustic model array and cumulative evaluation value thus obtained, the acoustic model array having the highest cumulative evaluation value or a plurality of upper acoustic model arrays from the one having the highest cumulative evaluation value are selected.

In connecting the acoustic models in accordance with the language model, common parts from an acoustic model indicating the beginning of the word to an acoustic model indicating the ending of the word are bundled. Using a network thus obtained, accumulation of the evaluation value is carried out from the beginning point to the ending point of the feature parameter sequence. Apart from this, common parts from an acoustic model indicating the ending of the word to an acoustic model indicating the beginning of the word are bundled. Using another network thus obtained, accumulation of the evaluation value is carried out from the ending point to the beginning point of the feature parameter sequence.

Moreover, in connecting the acoustic models in accordance with the language model, common parts from an acoustic model indicating the beginning of the word to an acoustic model indicating the ending of the word are bundled, and at the same time, common parts from an acoustic model indicating the ending of the word to an acoustic model indicating the beginning of the word are bundled. Using a single network thus obtained, accumulation of the evaluation value from the beginning point to the ending point of the feature parameter sequence and accumulation of the evaluation value from the ending paint to the beginning point of the feature parameter sequence are carried out.

Then, in the process of accumulating the evaluation value from the beginning point to the ending point of the feature parameter sequence, the halfway result of the accumulation of the evaluation value from the beginning point and the acoustic model array for providing the evaluation value of the halfway result are stored. In the other process, that is, in the process of accumulating the evaluation value from the ending point to the beginning point of the feature parameter sequence, when it is necessary to carry out accumulation of the evaluation value with respect to the same acoustic model array using the same feature parameter sequence, that is, when processing for accumulating the evaluation value with respect to the acoustic model array using the feature parameter sequence to the remaining beginning point is generated and the evaluation value accumulated in the backward direction, that is, from the beginning point, is already calculated and stored as the corresponding cumulative evaluation value, the calculation for accumulating the evaluation value using the feature parameter sequence to the remaining beginning point is omitted by using the stored value.

Also, with respect to the restriction in evaluating the acoustic similarity to each feature parameter, that is, with respect to the restriction as to how much part of the acoustic models connected in accordance with the language model should be the target of the evaluation, the restriction is moderated in the case where the accumulation of the evaluation value is carried out from the beginning point to the ending point of the feature parameter sequence while the restriction is strengthened in the case where the accumulation of the evaluation value is carried out from the ending point to the beginning point of the feature parameter sequence.

Moreover, at the end of the processing for accumulating the evaluation value from the beginning point to the ending point of the feature parameter sequence, the acoustic model array of the highest cumulative evaluation value or a plurality of upper acoustic model arrays from the one having the highest cumulative evaluation value are selected and outputted. After the accumulation of the evaluation value is carried out from the ending point to the beginning point of the feature parameter sequence, if the result obtained by combining the processing from the beginning point to the ending point and the processing from the ending point to the beginning point is the same as the foregoing result, a signal indicating that the result is the same is outputted. If the result is different, the acoustic model array of the highest cumulative evaluation value or a plurality of upper acoustic model arrays from the one having the highest cumulative evaluation value are newly selected and outputted.

As described above, there is proposed the speech recognition unit and method for finding a word sequence as a recognition result at a high speed in the speech recognition unit for automatically finding and outputting a word sequence corresponding to an input audio signal.

In the above-described embodiment, the HMM is used as the recognition technique. However, this invention is not limited to this embodiment. According to the present invention, DP matching and a neural network can be employed in addition to the HMM as the recognition technique.

In the present invention, the forward score calculation and the backward score calculation are carried out independently, and the results of both calculations are integrated. Thus, a word sequence corresponding to an input audio signal is found at a higher speed than in the conventional technique.

For example, on the assumption of the score calculation on a state transition network, the score calculation in which the number of states subject to cumulative score calculation is simply limited as in the conventional technique results in trade-off between the rate of correct answer and the parameter of calculation. Consequently, a large parameter of calculation is required for achieving a high rate of correct answer, or the rate of correct answer must be lowered because of the computing power.

In the present invention, however, since correction is carried out depending on the result of the backward score calculation, it is not necessary to achieve a high rate of correct answer by the forward score calculation alone, and consequently the total parameter of calculation can be significantly reduced.

Also, according to the present invention, in order to reduce the delay in the response due to the backward score calculation, there are proposed the technique of bundling common parts in the forward score calculation and the backward score calculation, the technique of varying the restriction between the forward score calculation and the backward score calculation, and the technique of outputting the result of the forward score calculation first and then carrying out correction processing in accordance with the result of the backward score calculation. Thus, the response speed in carrying out the processing while inputting a speech can be improved further.

**Claims**

1. A speech recognition unit having an acoustic analysis section for extracting an acoustic feature parameter sequence from an audio signal and a recognition process section for providing a word candidate corresponding to the audio signal using acoustic models of the acoustic feature sequence and a language model prescribing the connection of the acoustic models on the basis of the feature parameter sequence supplied from the acoustic analysis section, the speech recognition unit comprising:

   first evaluation means for restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence;
   second evaluation means for restricting target evaluation models for carrying out evaluation from the plurality of evaluation models while storing evaluation values with respect to the similarity to the feature sequence in a backward order from the ending point toward the beginning point of the feature parameter sequence; and
   selection means for selecting an evaluation model that gives the maximum evaluation value of the evaluation values obtained by the first evaluation means and the second evaluation means.

2. The speech recognition unit as claimed in claim 1, wherein the selection means selects a plurality of evaluation models in an order from the greatest evaluation value.

3. The speech recognition unit as claimed in claim 1, wherein the first evaluation means makes common the parts that can be made common in the forward order with respect to the plurality of evaluation models and the second evaluation means makes common the parts that can be made common in the backward order with respect to the plurality of evaluation models.

4. The speech recognition unit as claimed in claim 1, wherein the first evaluation means and the second evaluation means make common the parts that can be made common in the forward order and the backward order with respect to the plurality of models.

5. The speech recognition unit as claimed in claim 1, further comprising a table for storing the evaluation value of the parts that can be made common of the plurality of evaluation models, wherein in evaluation of the plurality of evaluation models, the first evaluation means and the second evaluation means store the evaluation value if the evaluation value is not stored in the table, and read out the evaluation value if the evaluation value is stored in the table.

6. The speech recognition unit as claimed in claim 1, further comprising a table for storing the evaluation value of the parts that can be made common of the plurality of evaluation models, and means for calculating in advance the evaluation value of the parts that can be made common of the plurality of models and storing the evaluation value in the table.

**7.** The speech recognition unit as claimed in claim 6, further comprising frequency detection means for detecting the frequency of reference to the table, wherein the first evaluation means and the second evaluation means restrict the evaluation models to be evaluation targets from the plurality of evaluation models.

**8.** The speech recognition unit as claimed in claim 4, wherein the first evaluation means stores the evaluation values of the plurality of evaluation models in the forward order on the basis of the acoustic model as a unit, and the second evaluation means stores the evaluation values of the plurality of evaluation models in the backward order on the basis of the acoustic model as a unit and makes common that can be made common of the evaluation values of the plurality of evaluation models.

**9.** The speech recognition unit as claimed in claim 1, wherein the restriction on the plurality of evaluation models by the first evaluation means is more moderate than the restriction on the plurality of evaluation models by the second evaluation means.

**10.** The speech recognition unit as claimed in claim 1, further comprising: first output means for outputting a predetermined number of evaluation models in an order from the greatest evaluation value in accordance with the result of evaluation by the first evaluation means; comparison means for determining whether or not the result of evaluation by the second evaluation means coincides with the result of evaluation by the first evaluation means; signal output means for outputting a signal if coincidence is determined by the comparison means; and second output means for outputting a predetermined number of evaluation models in an order from the greatest evaluation value in accordance with the result of evaluation by the first evaluation means and the second evaluation means if non-coincidence is determined by the comparison means.

**11.** A speech recognition having an acoustic analysis step of extracting an acoustic feature parameter sequence from an audio signal and a recognition process step of providing a word candidate corresponding to the audio signal using acoustic models of the acoustic feature sequence and a language model prescribing the connection of the acoustic models on the basis of the feature parameter sequence supplied from the acoustic analysis step, the method comprising:

a first evaluation step of restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence;
a second evaluation step of restricting target evaluation models for carrying out evaluation from the plurality of evaluation models while storing evaluation values with respect to the similarity to the feature sequence in a backward order from the ending point toward the beginning point of the feature parameter sequence; and
a selection step of selecting an evaluation model that gives the maximum evaluation value of the evaluation values obtained ate the first evaluation step and the second evaluation step.

**12.** A navigation unit comprising:

a current position detection unit for detecting the current position of a vehicle;

a direction detection unit for detecting the travelling direction of the vehicle;

storage means in which road map information is stored;

arithmetic processing means for calculating current position information corrected to locate the current position of the vehicle on a road on the basis of the current position of the vehicle detected by the current position detection means and the road map information read out from the storage means;

audio input means for inputting an audio signal;

speech recognition means, having an acoustic analysis section for extracting an acoustic feature parameter sequence from an audio signal inputted to the audio input means and a recognition process section for providing a word candidate corresponding to the audio signal using acoustic models of the acoustic feature sequence and a language model prescribing the connection of the acoustic models on the basis of the feature parameter sequence supplied from the acoustic analysis section, the speech recognition means including first evaluation means for restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence, second evaluation means for restricting target evaluation models for carrying out evaluation from the plurality of evaluation models while storing evaluation values with respect to the similarity to the feature sequence in a backward order from the ending point toward the beginning point of the feature parameter sequence, and selection means for selecting an evaluation model that gives the maximum evaluation value of the evaluation values obtained by the first evaluation means and the second evaluation means, the speech recognition means being adapted for recognizing the audio signal inputted from the audio input means;

control means for reading out the road map information from the storage means on the basis of the current position information calculated by the arithmetic processing means and for controlling the operating state on the basis of speech recognition information obtained from the speech recognition means; and

display means for displaying the current position by means of the current position information on the road map read out from the storage means.

13. The navigation unit as claimed in claim 12, wherein the speech recognition means recognizes a speech instructing a prefecture name, a city, ward, town or village name and a specified operation from an audio signal inputted to the audio input means, and the control means controls reading from the storage means on the basis of the speech recognition information recognized by the speech recognition means.

14. The navigation unit as claimed in claim 12, wherein the speech recognition means recognizes a speech instructing switching of various modes from an audio signal inputted to the audio input means, and the control means controls mode switching on the basis of the speech recognition information recognized by the speech recognition means.

15. A portable telephone unit for carrying out communication with a base station using electromagnetic waves of a radio frequency, comprising:

audio input means for inputting an audio signal;

key input means for inputting information by key operation;

modulation means for modulating the audio signal inputted to the audio input means to a signal of a radio frequency;

an antenna for transmitting the signal of the radio frequency sent from the modulation means and for receiving a signal of a radio frequency;

demodulation means for demodulating the signal of the radio frequency received by the antenna to an audio signal;

audio output means for outputting the signal of the radio frequency demodulated to the audio signal by the demodulation means and received by the antenna;

speech recognition means, having an acoustic analysis section for extracting an acoustic feature parameter sequence from the audio signal and a recognition process section for providing a word candidate corresponding to the audio signal using acoustic models of the acoustic feature sequence and a language model prescribing the connection of the acoustic models on the basis of the feature parameter sequence supplied from the acoustic analysis section, the speech recognition means including first evaluation means for restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence, second evaluation means for restricting target evaluation models for carrying out evaluation from the plurality of evaluation models while storing evaluation values with respect to the similarity to the feature sequence in a backward order from the ending point toward the beginning point of the feature parameter sequence, and selection means for selecting an evaluation model that gives

**EP 1 024 476 A1**

the maximum evaluation value of the evaluation values obtained by the first evaluation means and the second evaluation means, the speech recognition means being adapted for recognizing the audio signal inputted from the audio input means; and

control means for controlling the communication operation on the basis of the information inputted to the key input means or speech recognition information recognized by the speech recognition means.

16. The portable telephone unit as claimed in claim 15, wherein a telephone number is given to the control means as the information from the key input means or the speech recognition information from the speech recognition means.

17. An information processing device comprising:

storage means in which a program is stored;

key input means for inputting information in response to key operation;

audio input means for inputting an audio signal;

speech recognition means, having an acoustic analysis section for extracting an acoustic feature parameter sequence from an audio signal inputted to the audio input means and a recognition process section for providing a word candidate corresponding to the audio signal using acoustic models of the acoustic feature sequence and a language model prescribing the connection of the acoustic models on the basis of the feature parameter sequence supplied from the acoustic analysis section, the speech recognition means including first evaluation means for restricting evaluation target models for carrying out evaluation from a plurality of evaluation models made up of an acoustic model array formed by connecting the acoustic models in accordance with the language model while storing evaluation values of similarity to the feature sequence in a forward order from the beginning point toward the ending point of the feature parameter sequence, second evaluation means for restricting target evaluation models for carrying out evaluation from the plurality of evaluation models while storing evaluation values with respect to the similarity to the feature sequence in a backward order from the ending point toward the beginning point of the feature parameter sequence, and selection means for selecting an evaluation model that gives the maximum evaluation value of the evaluation values obtained by the first evaluation means and the second evaluation means, the speech recognition means being adapted for recognizing the audio signal inputted from the audio input means; and

arithmetic means for controlling the processing state of the program on the basis of the information from the key input means or speech recognition means from the speech recognition means.

26

**FIG.1**

**FIG.2**

# FIG.3

# FIG.4

**FIG.5**

**FIG.6**

**FIG.7**

**FIG.8**

**FIG.9**

**FIG.10**

FIG.11

FIG.12

**FIG.13**

FIG.14

**FIG.15**

**FIG.16A**

**FIG.16B**

**FIG.16C**

FIG.17

**FIG.18**

FIG.19

**FIG.20**

EP 1 024 476 A1

**FIG.21**

FIG.22

# INTERNATIONAL SEARCH REPORT

| | International application No. |
| --- | --- |
| | PCT/JP99/04424 |

| A. CLASSIFICATION OF SUBJECT MATTER |
| --- |
| Int.Cl⁶ G10L3/00, H04B7/26, H04M1/27, G01C21/00 |

According to International Patent Classification (IPC) or to both national classification and IPC

| B. FIELDS SEARCHED |
| --- |
| Minimum documentation searched (classification system followed by classification symbols) |
| Int.Cl⁶ G10L3/00-9/20, H04B7/26 |

| Documentation searched other than minimum documentation to the extent that such documents are included in the fields searched |
| --- |
| Jitsuyo Shinan Koho 1926-1995 Toroku Jitsuyo Shinan Koho 1994-1999 |
| Kokai Jitsuyo Shinan Koho 1971-1999 Jitsuyo Shinan Toroku Koho 1996-1999 |

| Electronic data base consulted during the international search (name of data base and, where practicable, search terms used) |
| --- |
| JICST File on Science and Technology (JOIS) |
| INSPEC (DIALOG) |
| WPI (DIALOG) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP, 7-7273, B2 (Mitsubishi Electric Corp.), | 1-6, 8, 11 |
| | 30 January, 1995 (30. 01. 95) (Family: none) | |
| Y | | 7, 12-14, |
| | | 15-16, 17 |
| A | | 9, 10 |
| Y | JP, 2-36960, B2 (Denshi Keisanki Kihon Gijutsu Kenkyu Kumiai), 21 August, 1990 (21. 08. 90) (Family: none) | 7 |
| Y | JP, 9-114489, A (Sony Corp.), 2 May, 1997 (02. 05. 97) & EP, 768638, A2 & KR, 97022962, A | 12-14 |
| Y | JP, 2-305159, A (Toshiba Corp.), 18 December, 1990 (18. 12. 90) & US, 5384834, A & CA, 2016935, C | 15-16 |
| Y | JP, 4-40557, A (Seiko Epson Corp.), 10 February, 1992 (10. 02. 92) (Family: none) | 17 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 12 October, 1999 (12. 10. 99) | 26 October, 1999 (26. 10. 99) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

**INTERNATIONAL SEARCH REPORT**

International application No.

PCT/JP99/04424

| C (Continuation). DOCUMENTS CONSIDERED TO BE RELEVANT | | |
|---|---|---|
| Category* | Citation of document, with indication, where appropriate, of the relevant passages | Relevant to claim No. |
| A | Proceedings on 1994 IEEE International Conference on Acoustics, Speech and Signal Processing, Vol. 2, 1994, IEEE, p.II-41-II-44 | 1-17 |

Form PCT/ISA/210 (continuation of second sheet) (July 1992)